(19) Europäisches Patentamt / European Patent Office / Office européen des brevets

(11) **EP 4 518 197 A1**

(12) **EUROPEAN PATENT APPLICATION**
published in accordance with Art. 153(4) EPC

(43) Date of publication:
**05.03.2025 Bulletin 2025/10**

(21) Application number: **23795067.0**

(22) Date of filing: **14.04.2023**

(51) International Patent Classification (IPC):
*H04B 17/309* (2015.01)

(52) Cooperative Patent Classification (CPC):
**H04B 17/00; H04B 17/309**

(86) International application number:
**PCT/CN2023/088440**

(87) International publication number:
**WO 2023/207634 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022 CN 202210453625**

(71) Applicant: **ZTE Corporation
Shenzhen, Guangdong 518057 (CN)**

(72) Inventors:
• **CHEN, Yijian**
**Shenzhen, Guangdong 518057 (CN)**
• **DOU, Jianwu**
**Shenzhen, Guangdong 518057 (CN)**
• **YANG, Jun**
**Shenzhen, Guangdong 518057 (CN)**
• **LU, Zhaohua**
**Shenzhen, Guangdong 518057 (CN)**
• **FANG, Min**
**Shenzhen, Guangdong 518057 (CN)**

(74) Representative: **Savi, Massimiliano et al
Notarbartolo & Gervasi S.p.A.
Viale Achille Papa, 30
20149 Milano (IT)**

(54) **REGULATION AND CONTROL METHOD, INFORMATION PROCESSING METHOD, SIGNAL REGULATION APPARATUS, AND DEVICE AND MEDIUM**

(57) The embodiments of the present application relate to the technical field of communications. Provided are a regulation and control method, an information processing method, a signal regulation apparatus, and a device and a medium. The regulation and control method for a signal regulation apparatus comprises: acquiring indication information; determining a measurement regulation and control parameter set according to the indication information, wherein the measurement regulation and control parameter set comprises measurement regulation and control information of a plurality of signal regulation apparatuses; and according to the measurement regulation and control information, regulating and controlling electromagnetic characteristics of an electromagnetic unit in the signal regulation apparatus, such that the electromagnetic unit reflects pilot information to a second communication device, so as to measure target regulation and control information of the signal regulation apparatus.

EP 4 518 197 A1

First communication
apparatus

Second communication
apparatus

Intelligent surface

S4400: Send indication
information to the
device for signal tuning

Indication information

S2100: Acquire indication
information

S4100: Send pilot information

S2200: Determine a measurement
and tuning parameter set according
to the indication information

Pilot information

S2300: Tune an electromagnetic
characteristic of an electromagnetic unit
in the device for signal tuning according
to the measurement and tuning
information, to allow the electromagnetic
unit to reflect pilot information to the
second communication apparatus

Pilot information

S3100: Send feedback information to
the first communication apparatus
in response to pilot information sent
by a device for signal tuning

Feedback information

S4200: Acquire feedback
information from the
second communication
apparatus

S4300: Obtain target tuning
information through calculation
according to the feedback
information, a measurement and
tuning parameter set, and a set
pattern of the measurement and
tuning parameter set

# FIG. 11

**Description**

**CROSS-REFERENCE TO RELATED APPLICATION**

This application is filed on the basis of Chinese patent application No. 202210453625.8 filed April 27, 2022, and claims priority to the Chinese patent application, the entire contents of which are incorporated herein by reference.

**TECHNICAL FIELD**

The present disclosure relates to the technical field of communication, and in particular, to a method for tuning, a method for information processing, a device for signal tuning, a device, and a medium.

**BACKGROUND**

A device for signal tuning is a wireless environment with active electromagnetic fields on its surface. Each part of the wireless environment can transmit and receive electromagnetic fields. If these electromagnetic fields can be intelligently controlled, it is possible to concentrate energy in a three-dimensional space for transmission and reception, thus improving the energy efficiency and reducing interference. For example, the device for signal tuning may be an intelligent surface.

In the related technology, to effectively change electromagnetic characteristics of each part of the device for signal tuning, it is necessary to accurately acquire channel information between a first communication apparatus and the device for signal tuning and channel information between the device for signal tuning and a second communication apparatus. If the channel information is measured by pilot feedback to obtain adjustment information, the measurement efficiency is low.

**SUMMARY**

The following is a summary of the subject matter set forth in this description. This summary is not intended to limit the scope of protection of the claims.

Provided are a method for tuning, a method for information processing, a device for signal tuning, an apparatus, and a medium in some embodiments of the present disclosure, which can effectively improve the measurement efficiency of tuning information of the apparatus for signal tuning.

In accordance with a first aspect of the present disclosure, an embodiment provides a method for tuning, for a device for signal tuning. The method includes: acquiring indication information; determining a measurement and tuning parameter set according to the indication information. The measurement and tuning parameter set includes measurement and tuning information of a plurality of device for signal tuning. The method further includes tuning an electromagnetic characteristic of an electromagnetic unit in the device for signal tuning according to the measurement and tuning information, to allow the electromagnetic unit to reflect pilot information to a second communication apparatus, to measure target and tuning information of the device for signal tuning.

In accordance with a second aspect of the present disclosure, an embodiment provides a method for information processing, which is applied to a second communication apparatus. The method includes: sending feedback information to a first communication apparatus in response to pilot information sent by a device for signal tuning, to measure target and tuning information of the device for signal tuning. The pilot information is sent by the device for signal tuning by performing the method for tuning for the device for signal tuning in accordance with the first aspect.

In accordance with a third aspect of the present disclosure, an embodiment provides a method for information processing, which applied to a first communication apparatus. The method includes: sending pilot information, to allow a device for signal tuning to reflect the pilot information to a second communication apparatus by performing the method for tuning for the device for signal tuning in accordance with the first aspect of the present disclosure; acquiring feedback information from the second communication apparatus; and obtaining target tuning information through a calculation according to the feedback information, a measurement and tuning parameter set, and a set pattern of the measurement and tuning parameter set.

In accordance with a fourth aspect of the present disclosure, an embodiment provides a method for information processing, which is applied to a communication system including a first communication apparatus, a device for signal tuning, and a second communication apparatus. The method includes: performing, by the first communication apparatus, the method for information processing in accordance with the third aspect; performing, by the device for signal tuning, the method for tuning of the device for signal tuning in accordance with the first aspect; and performing, by the second communication apparatus, the method for information processing in accordance with the second aspect.

In accordance with a fifth aspect of the present disclosure, an embodiment provides a method for information processing, which is applied to a first communication apparatus. The method includes determining at least one target base vector. The target base vector is obtained by processing first channel information and second channel information through a first preset function, and is indicative of a difference between the first channel information and the second channel information. The first channel is a channel between the first communication apparatus and the device for signal tuning. The second channel is a channel between the device for signal tuning and the second communication apparatus. The method further includes, processing the target base vector by a second preset function to obtain target and tuning information.

In accordance with a sixth aspect of the present disclosure, an embodiment provides a device for signal tuning. The device includes: a first memory, a first processor, and a computer program stored in the first memory and executable by the first processor, where the computer program, when executed by the first processor, causes the first processor to implement the method for tuning in accordance with the first aspect.

In accordance with a seventh aspect of the present disclosure, an embodiment provides a communication apparatus. The communication apparatus includes: a second memory, a second processor, and a computer program stored in the second memory and executable by the second processor, where the computer program, when executed by the second processor, causes the second processor to implement the method for information processing in accordance with the second aspect, or the method for information processing in accordance with the third aspect.

In accordance with an eighth aspect of the present disclosure, an embodiment provides a computer-readable storage medium. The computer-readable storage medium stores a computer-executable instruction which, when executed by a processor, causes the processor to implement the method for tuning for the device for signal tuning in accordance with the first aspect, or the method for information processing in accordance with the second aspect or the third aspect.

According to the method for tuning set forth in the first aspect of the present disclosure, indication information is acquired; a measurement and tuning parameter set is determined according to the indication information; and an electromagnetic characteristic of an electromagnetic unit in the device for signal tuning is tuned according to the measurement and tuning information, to allow the electromagnetic unit to reflect pilot information to a second communication apparatus, to measure target and tuning information of the device for signal tuning. In various embodiments of the present disclosure, the measurement efficiency of tuning information of the device for signal tuning is effectively improved by tuning the electromagnetic characteristic of the electromagnetic unit in the device for signal tuning according to the indication information.

It can be understood that the beneficial effects of the second to eighth aspects over the related technology are the same as the beneficial effects of the first aspect over the related technology, and reference may be made to the related description in the first aspect, so the details will not be repeated herein.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

## BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.

FIG. 1 is a schematic diagram of a system architecture platform where a method for information processing according to an embodiment of the present disclosure may be carried out;

FIG. 2 is a flowchart of a method for information processing from the perspective of a first communication apparatus according to an embodiment of the present disclosure;

FIG. 3 is a flowchart of a method for tuning from the perspective of an intelligent surface according to an embodiment of the present disclosure;

FIG. 4 is a schematic diagram showing set patterns of four pilots in a method for tuning method according to an embodiment of the present disclosure;

FIG. 5 is a schematic diagram showing set patterns of eight pilots in a method for tuning according to an embodiment of the present disclosure;

FIG. 6 is a flowchart of a method for information processing from the perspective of a second communication apparatus according to an embodiment of the present disclosure;

FIG. 7 is a flowchart of a method for information processing from the perspective of a second communication apparatus according to another embodiment of the present disclosure;

FIG. 8 is a flowchart of a method for information processing from the perspective of a second communication apparatus according to another embodiment of the present disclosure;

FIG. 9 is a flowchart of a method for information processing from the perspective of a first communication apparatus according to an embodiment of the present disclosure;

FIG. 10 is a flowchart of a method for information processing from the perspective of a first communication apparatus according to another embodiment of the present disclosure; and

FIG. 11 is a flowchart of a method for information processing for a communication system according to an embodiment of the present disclosure.

## DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although logical orders have been shown in the flowcharts, in some cases, the operations shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

A device for signal tuning is a wireless environment with active electromagnetic fields on its surface. Each part of the wireless environment can transmit and receive electromagnetic fields. If these electromagnetic fields can be intelligently controlled, it is possible to concentrate energy in a three-dimensional space for transmission and reception, thus improving the energy efficiency and reducing interference.

For example, an intelligent surface is also called a smart surface, a Reconfigurable Intelligent Surface (RIS), etc. By changing an electromagnetic characteristic of an intelligent surface element, i.e., an adjustable electromagnetic unit, in the intelligent surface, an adjustable radiation electric field can be generated to obtain a desired radiation characteristic, so as to achieve a Multiple-In Multiple-Out (MIMO) beamforming effect when transmitting or reflecting signals. The device for signal tuning may be applied to different scenarios such as wireless communication, wireless charging, and remote sensing, enabling the physical environment to become "smart" and interactive. Electromagnetic characteristics that can theoretically be adjusted and changed include phase, amplitude, frequency, polarization, angular momentum, etc. Because the intelligent surface is capable of changing electromagnetic characteristics, electromagnetic waves can be controlled in an expected way.

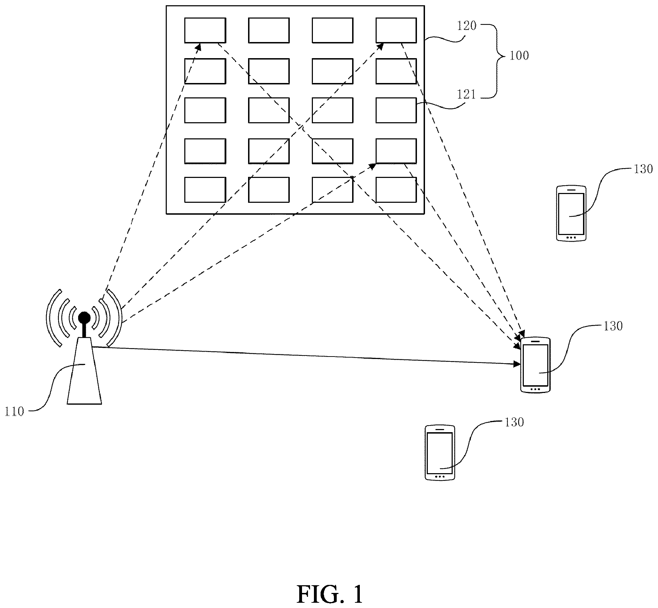

The main application of the device for signal tuning is to use its reflection effect to assist in communication, improve coverage or increase the number of transmission layers, as shown by an architecture in FIG. 1. In the related technology, to effectively change electromagnetic characteristics of each part of the device for signal tuning, it is necessary to accurately acquire channel information between a base station and the intelligent surface and channel information between the intelligent surface and a mobile terminal. However, as the costs of the device for signal tuning are required to be low, the device for signal tuning often cannot be used to perform channel measurement to obtain corresponding adjustment information. If pilot feedback is used for measurement, the measurement efficiency is low.

In view of the above, a first aspect of the embodiments of the present disclosure provide a method for tuning, an information processing method, a device for signal tuning, a device, and a medium. The method includes: acquiring indication information; determining a measurement and tuning parameter set according to the indication information; and tuning an electromagnetic characteristic of an electromagnetic unit in the device for signal tuning according to the measurement and tuning information, to allow the electromagnetic unit to reflect pilot information to a second communication apparatus, to measure target adjustment information of the device for signal tuning. In the embodiments of the present disclosure, the measurement efficiency of adjustment information of the device for signal tuning is effectively improved by tuning the electromagnetic characteristic of the electromagnetic unit in the device for signal tuning according to the indication information.

The embodiments of the present disclosure will be further described in detail below in conjunction with the accompanying drawings. An example where the device for signal tuning is an intelligent surface, the first communication apparatus is a base station, and the second communication apparatus is a user terminal device will be described.

FIG. 1 is a schematic diagram of a system architecture platform 100 where an adjustment method according to an embodiment of the present disclosure may be carried out.

In the example of FIG. 1, the system architecture platform 100 includes a base station 110, an intelligent surface 120, and a user terminal device 130. The intelligent surface 120 is provided with a plurality of electromagnetic units 121 and a controller (not shown). The base station 110 may be in communicative connection with the user terminal device 130. The base station 110 may also be in communicative connection with the user terminal device 130 through the controller of the intelligent surface 120. The controller of the intelligent surface 120 may also be in communicative connection with the base station. The controller is configured for receiving indication information from the base station and tuning the electromagnetic units. The technical scheme of this embodiment mainly solves the problems existing in the structure of communicative connection between the base station 110 and the user terminal device 130 through the intelligent surface 120.

It should be noted that the intelligent surface 120 may be an RIS, which can achieve wireless communication, wireless charging, and remote sensing, enabling the physical environment to become "smart" and interactive. On one hand, the intelligent surface 120 can intelligently control the channel environment to provide a higher transmission capacity, higher efficiency of wireless charging, and higher robustness. On the other hand, the intelligent surface 120 can support access by massive terminal devices. The intelligent surface 120 in this embodiment can be extended to a wireless environment with physically active electromagnetic fields on its surface. Each part of the wireless environment can transmit and receive electromagnetic fields. If these electromagnetic fields can be intelligently controlled, it is possible to concentrate energy in a three-dimensional space for transmission and reception, thus improving the energy efficiency and reducing interference. Therefore, such surfaces will bring new electromagnetic environment communication, as well as sensing and control capabilities. The intelligent surface can be used in various aspects, including solving the problem of high-frequency non-line-of-sight (NLOS) transmission, solving the problem of coverage holes, reducing electromagnetic pollution, achieving a passive Internet of Things, achieving low-cost massive transmission and reception, and increasing the spatial degree of freedom of channels.

The basic principle of the intelligent surface 120 is that by changing an electromagnetic characteristic of an intelligent surface element, i.e., an adjustable electromagnetic unit, in the intelligent surface, an adjustable radiation electric field can be generated to obtain a desired radiation characteristic, so as to achieve a MIMO beamforming effect when transmitting or reflecting signals. Electromagnetic characteristics that can theoretically be adjusted and changed include, but not limited to, phase, amplitude, frequency, polarization, and angular momentum. Because the intelligent surface is capable of changing electromagnetic characteristics, electromagnetic waves can be controlled in an expected way, providing wide application prospects.

It should be noted that the number and arrangement form of the electromagnetic units 121 in the intelligent surface 120 may be set according to an actual situation, which is not particularly limited in this embodiment.

It can be understood by those having ordinary skills in the art that the base station 110 is an interface device for mobile devices to access the Internet, is also a form of a radio station, and is a radio transceiver station that performs information transmission with a mobile phone terminal device through a mobile communication switching center in a certain radio coverage area. For example, the base station may be a Base Transceiver Station (BTS) in a Global System for Mobile Communications (GSM) or Code Division Multiple Access (CDMA) system, a NodeB (NB) in a Wideband Code Division Multiple Access (W-CDMA) system, an evolutional NodeB (eNodeB) in a Long-Term Evolution (LTE) system, a 5th-generation (5G) base station, or a base station corresponding to a future evolved network.

It can be understood by those having ordinary skills in the art that the user terminal device 130 may also be referred to as a User Equipment (UE), an access terminal device, a subscriber unit, a subscriber station, a mobile site, a mobile station, a remote station, a remote terminal device, a mobile device, a user terminal device, a terminal device, a wireless communication apparatus, a user agent, or a user device. The user terminal device 130 in an embodiment of the present disclosure may be a mobile phone, a tablet computer (Pad), a computer with a wireless transceiver function, a Virtual Reality (VR) user terminal device, an Augmented Reality (AR) user terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, etc.

It can be understood by those having ordinary skills in the art that the system architecture platform may be applied to 2G, 3G, 4G, 5G, and 6G communication network systems, future evolved mobile communication network systems, etc., which is not particularly limited in this embodiment.

It can be understood by those having ordinary skills in the art that the system architecture platform shown in FIG. 1 does not constitute a limitation to the embodiments of the present disclosure, and more or fewer components than those shown in the figure may be included, or some components may be combined, or a different component arrangement may be used.

Various embodiments of the method for information processing and method for tuning of the present disclosure will be described in detail below based on the above system architecture platform.

In some embodiments, referring to FIG. 1, for a scenario with a line of sight (LOS) path, a received signal of a $k^{th}$ user terminal device (i.e., UE, which can be used as a second communication apparatus hereinafter) and received signals of K user terminal devices may be respectively modeled as follows:

the received signal of the $k^{th}$ user terminal device:

$$y_k = (h_{2,k}\Phi H_1 + h_k)x + n_k, x = \sum_{k=1}^{K}\sqrt{p_k}w_k s_k.$$

For a scenario with NLOS path, the received signal of the $k^{th}$ user terminal device and received signals of K user terminal devices may be respectively modeled as follows:

the received signal of the $k^{th}$ user terminal device:

$$y_k = (h_{2,k}\Phi H_1)x + n_k, x = \sum_{k=1}^{K}\sqrt{p_k}w_k s_k.$$

Definitions of parameters in the above two equations are shown in Table I below.

Table I

| Parameter | Meaning | Description |
|---|---|---|
| $h_k$ | LOS path channel between the $k^{th}$ second communication apparatus and the first communication apparatus | $[n_r \times n_t]$ dimensions |
| $h_{2,k}$ | Second channel: Channel between the $k^{th}$ second communication apparatus and the intelligent surface | $[n_r \times N]$ dimensions |
| $H_1$ | First channel: Channel between the first communication apparatus and the intelligent surface | $[N \times n_t]$ dimensions |
| $\Phi$ | Target adjustment information, i.e., phase adjustment matrix on the intelligent surface | $\Phi = diag([e^{j\theta_1}, e^{j\theta_2}, ..., e^{j\theta_N}])$ |
| $n_k$ | Noise signal at the time of transmission by the $k^{th}$ UE | White Gaussian noise |
| $y_k$ | Received signal of the $k^{th}$ UE | $[n_r \times 1]$ dimensions |
| y | Joint reception vector of all K UEs | $y = [y_1 \ y_2 \ ... \ y_k]^T$ |
| r | r is the total number of transmission layers of the K UEs | Scalar, less than or equal to $n_r$ |
| $p_k$ | Transmit power of the signal of the $k^{th}$ UE | The sum of transmit powers of the K UEs is equal to the total power |
| $s_k$ | Original signal sent by the $k^{th}$ UE | Complex-valued symbol |
| $w_k$ | Precoding by an AP for the $k^{th}$ UE | Vector or matrix of nt rows |

Each electromagnetic unit of the intelligent surface may add a configurable phase adjustment factor to a signal reflected thereby: $e^{j\theta_n}$, $n = 1, 2, ..., N_l$. Because the phase adjustment factor is configurable, the phase of the signal received by the intelligent surface can be adjusted to form a beam direction facing a target user. In addition, the phase adjustment factor may be adjusted to $\alpha_n e^{j\theta_n}$ according to the capability of the intelligent surface.

It should be noted that when the phase of the electromagnetic unit needs to be adjusted, $\Phi$ represents the target adjustment information. $\Phi$ represents a diagonal matrix related to the electromagnetic unit dimension, and diagonal elements that change with electromagnetic units are not equal. Assuming that the intelligent surface has N electromagnetic units, the target adjustment information $\Phi$ should be a diagonal matrix with N*N elements. For example, an intelligent surface with an electromagnetic unit dimension of 16*16 has 256 electromagnetic units in total, the target adjustment information $\Phi$ may be a 256*256 diagonal matrix.

It should be noted that the intelligent surface may include an amplitude adjustment section and a phase adjustment section, or may include only a phase adjustment section, depending on the capability of the intelligent surface. $\Phi$ may have $N \times N$, $N \times n_t$, or $n_t \times r$ dimensions.

If first channel information $H_1$ and second channel information $h_{2,k}$ can be accurately acquired, the target adjustment information Φ can be obtained, so as to control data transmission in a targeted manner. As such, a reflection path signal with strong power can be generated, thereby solving the problem of high-frequency non-LOS transmission, solving the problem of coverage holes, reducing electromagnetic pollution, achieving a passive Internet of Things, achieving low-cost massive transmission and reception, increasing the spatial degree of freedom of channels, and so on. The acquisition of accurate channel information related to the intelligent surface is of great significance. However, in practice, as the costs of the intelligent surface are required to be low, no channel measurement device can be arranged on the intelligent surface. As a result, the intelligent surface cannot acquire accurate channel information, failing to give full play to its performance.

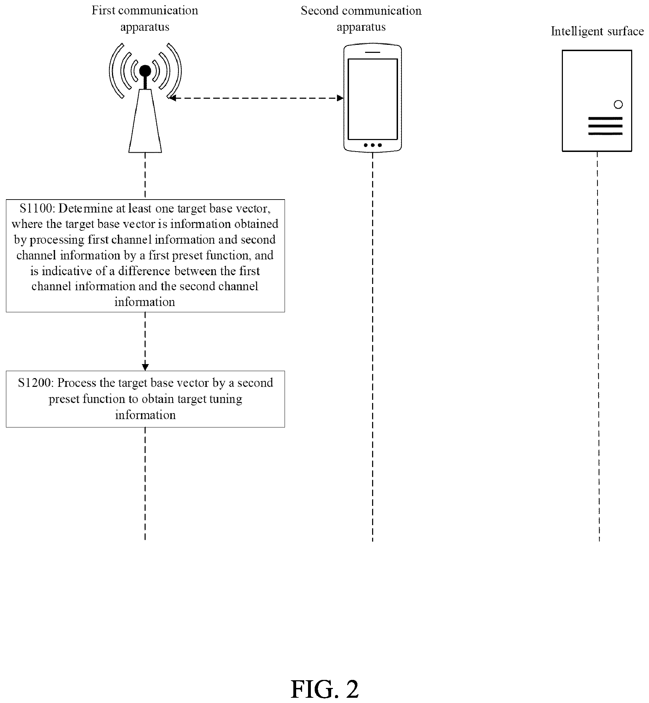

Referring to FIG. 2, in some embodiments, the present disclosure further provides a method for information processing, applied to a first communication apparatus. The method includes the following operations S1100 to S1200.

At S1100, at least one target base vector is determined. The target base vector is information obtained by processing first channel information and second channel information by a first preset function, and is indicative of a difference between the first channel information and the second channel information. The first channel is a channel between the first communication apparatus and the device for signal tuning. The second channel is a channel between the device for signal tuning and the second communication apparatus.

At S1200, the target base vector is processed by a second preset function to obtain target adjustment information.

Based on the foregoing description, it can be seen that if accurate $h_{2,k}$ and $H_1$ are acquired, the phase tuning matrix Φ on the intelligent surface can be accurately determined according to $h_{2,k}$ and $H_1$. According to a method in the related technology, $h_{2,k}$ and $H_1$ are respectively measured, and then optimal target tuning information Φ is calculated based on $h_{2,k}$ and $H_1$. In some embodiments of the present disclosure, the first channel information and the second channel information may be processed by the first preset function to obtain the target base vector, and then S1200 may be executed to process the target base vector by the second preset function to obtain the target tuning information. As such, the technical problem of respectively measuring $h_{2,k}$ and $H_1$ is changed to the technical problem of measuring the target base vector. Since the operations of acquiring channel information between the first communication apparatus and the intelligent surface and acquiring channel information between the intelligent surface and the second communication apparatus in the related technology does not need to be performed, the problem that the intelligent surface cannot perform measurement to obtain channel information due to the requirement for low costs can be avoided, and the performance of the intelligent surface can be fully exerted.

In some embodiments, in S1100, determining at least one target base vector includes the following operations S1110 to S1140.

At S1110, left singular vector transformation is performed on the first channel to obtain left singular vector information.

At S1120, right singular vector transformation is performed on the second channel to obtain right singular vector information.

At S1130, a first vector function indicative of difference information between the left singular vector information and the right singular vector information is constructed.

At S1140, a Discrete Fourier Transform (DFT) vector corresponding to the first vector function is determined as the target base vector.

In some embodiments, the first preset function may be a correlation function for singular vector processing. For example, the processing of the first channel information and the second channel information by the first preset function may be processing the first channel information and the second channel information by executing S1110 to S1140.

In some embodiments, the first communication apparatus may exchange information with the second communication apparatus to acquire the target base vector according to feedback information of the second communication apparatus to calculate a first vector. The first vector is indicative of difference information between the left singular vector information of the first channel and the right singular vector information of the second channel. The first channel is a channel between the first communication apparatus and the intelligent surface. The second channel is a channel between the intelligent surface and the second communication apparatus. The first communication apparatus can exchange information with the second communication apparatus, actively send information to the second communication apparatus, passively receive information sent from the second communication apparatus, or actively request the second communication apparatus for required information. For example, in this embodiment, the first communication apparatus can acquire feedback information sent from the second communication apparatus to acquire the target base vector to calculate a first vector. The first vector is indicative of difference information between the left singular vector information of the first channel and the right singular vector information of the second channel. The first channel is a channel between the first communication apparatus and the intelligent surface. The second channel is a channel between the intelligent surface and the second communication apparatus. The difference information is used for calculating the target tuning information.

In some embodiments, processing the target base vector by a second preset function to obtain target tuning information in S1200 includes the following operations S1210 to S1230.

At S1210, a weight coefficient corresponding to the target base vector is acquired.

At S1220, a first vector is calculated according to the target base vector, the weight coefficient, and the first vector function.

At S1230, diagonalization processing is performed on the first vector to obtain the target tuning information.

In some embodiments, the first communication apparatus can obtain the target base vector through measurement using the feedback information acquired from the second communication apparatus, to calculate the target tuning information. It can be understood that the target tuning information may be used for instructing the intelligent surface to adjust the phase, amplitude, frequency, or polarization of the received information, which is not particularly limited in this embodiment.

In some embodiments, the first communication apparatus may send the target tuning information to the intelligent surface, such that the intelligent surface adjusts an electromagnetic unit in the intelligent surface according to the target tuning information. The first communication apparatus may send the target tuning information obtained according to the target base vector to the intelligent surface, such that the intelligent surface adjusts the electromagnetic unit in the intelligent surface according to the target tuning information. In an embodiment, the first vector capable of characterizing the difference information between the channel information between the first communication apparatus and the intelligent surface and the channel information between the intelligent surface and the second communication apparatus is acquired. Then the target tuning information for tuning the electromagnetic unit in the intelligent surface is acquired according to the first vector. As such, the operation of acquiring channel information between the first communication apparatus and the intelligent surface and acquiring channel information between the intelligent surface and the second communication apparatus in the related technology does not need to be performed. Therefore, the problem that the intelligent surface cannot perform measurement to obtain channel information due to the requirement for low costs can be avoided, and the performance of the intelligent surface can be fully exerted.

It should be noted that the intelligent surface adjusts electromagnetic characteristics such as phase, amplitude, frequency, polarization, and angular momentum of the electromagnetic unit in the intelligent surface according to the target tuning information.

The processing procedure of S1100 and S1200 will be described in detail below by way of an example.

In some embodiments, it is not necessary to accurately measure $h_{2,k}$ and $H_1$; instead, the difference information between the left singular vector information of the first channel and the right singular vector information of the second channel is measured, and then the target tuning information is calculated according to the difference information.

In some embodiments, singular value decomposition may be respectively performed on the second channel information $h_{2,k}$ and the first channel information $H_1$ by using the following equations:

$$h_{2,k} = \mathrm{u}_{2,k}\Sigma_{2,k}\mathrm{v}_{2,k}^{H} \qquad (1)$$

$$H_1 = \mathrm{u}_1\Sigma_1\mathrm{v}_1^{H} \qquad (2),$$

where $\mathrm{v}_{2,k}$ represents the right singular vector information of the second channel, and $\mathrm{u}_1$ represents the left singular vector information of the first channel.

Then, appropriate target tuning information $\Phi$ is selected from a measurement and tuning parameter set $\mathfrak{R}$, such that after the intelligent surface adjusts the phase of the electromagnetic unit according to the target tuning information $\Phi$, the distance between $\mathrm{v}_{2,k}$ and $\mathrm{u}_1$ can be minimized. As such, optimal transmission performance of the intelligent surface can be achieved. The method of selecting appropriate target tuning information $\Phi$ may be expressed in mathematical form as follows:

$$\min_{\Phi \in \mathfrak{R}}\{\mathrm{distance}(\mathrm{v}_{2,k}, \mathrm{u}_1)\} \qquad (3),$$

where "distance" represents a distance function, which may be defined using various distance definitions in mathematics, such as chord distance.

It should be noted that the first preset function may be a function group including the above equations (1), (2), and (3); and $\mathrm{v}_{2,k}$ and $\mathrm{u}_1$ may each be a vector, or a subspace (matrix) formed by a plurality of vectors, which is not particularly limited in this embodiment.

It should be noted that, for the first channel information $H_1$, suitable precoding may be set by the first communication apparatus (such as a base station) to change $\Sigma_1\mathrm{v}_1^{H}$ in equation (2) into a scalar (such as 1), so only the left singular vector information $\mathrm{u}_1$ needs to be considered for the first channel information $H_1$.

In some embodiments, the design idea of the present disclosure is to find appropriate target tuning information $\Phi$, such that the right singular vector $v_{2,k}$ of the second channel information $h_{2,k}$ matches the left singular vector $u_1$ of the first channel information $H_1$. In principle, the product of multiplying $\Phi$ by the first channel information $H_1$ should be as close to $v_{2,k}$ as possible. In other words, by decomposing $H_1$ and then multiplying $\Phi$ on the left, the technical problem can be changed to finding appropriate target tuning information $\Phi$, which can make the distance between $v_{2,k}$ and $u_1$ as small as possible. Therefore, in an embodiment of the present disclosure, to find appropriate target tuning information $\Phi$, it is not necessary to measure both channels (i.e., the first channel and the second channel), but instead, the difference information between $v_{2,k}$ and $u_1$ is measured, because $v_{2,k}$ is a target to which $u_1$ should be as close as possible after rotation (because the product of multiplying $u_1$ by the target tuning information $\Phi$ actually means a rotation of $u_1$).

Therefore, in the method for information processing of this technical scheme, it is not necessary to acquire accurate $h_{2,k}$ and $H_1$, and appropriate target tuning information $\Phi$ can be determined by acquiring the difference information between $v_{2,k}$ and $u_1$, thereby enabling the intelligent surface to achieve higher transmission performance.

The acquisition of the difference information between $v_{2,k}$ and $u_1$ will be described below. In some embodiments, the right singular vector $v_{2,k}$ of the second channel information $h_{2,k}$ and the left singular vector $u_1$ of the first channel information $H_1$ are mathematically converted to a weighted combination of target base vectors. Physically, the right singular vector $v_{2,k}$ of the second channel information $h_{2,k}$ and the left singular vector $u_1$ of the first channel information $H_1$ are actually a superposition of one or more paths formed by the first channel and the second channel. In other words, the quantity of target base vectors is correlated to the number of paths formed by the first channel and the second channel.

In some embodiments, the processing of the first preset function may be further deduced and described in detail.

First, according to characteristics of wireless channels and an antenna topology, $v_{2,k}$ and $u_1$ are respectively decomposed to respectively obtain cumulative forms of $v_{2,k}$ and $u_1$, as shown by the following equations:

$$\mathrm{v}_{2,k}(:,l)=\sum_{i=1}^{N_{2,k}^{l}}a_{2,k,i}^{l}c_{2,k,i}^{l} \qquad (4)$$

$$\mathrm{u}_{1}(:,l)=\sum_{\mathrm{i}=i}^{N_{1}^{l}}a_{1,j}^{l}c_{1,j}^{l} \qquad (5),$$

where $(:,l)$ represents the $l$th column, and $c_{1,j}^{l}$ and $c_{2,k,i}^{l}$ are base vectors. It should be noted that the base vector may be a DFT vector or a Kronecker product of DFT vectors, which is not particularly limited in this embodiment. For example, for electromagnetic elements of a linear array, a DFT vector may be used as the base vector. For another example, for a rectangular area array, a Kronecker product of DFT vectors may be used as the base vector. $a_{1,j}^{l}$ and $a_{2,k,i}^{l}$ in the equations are weighting coefficients in a complex form.

Then, the phase tuning matrix on the intelligent surface may be expressed in the following form:

$$\begin{aligned}
\Phi &= \mathrm{diag}\left(\mathrm{v}_{2,k}(:,l)\circ \mathrm{u}_1(:,l)\right)=\mathrm{diag}\left(\mathrm{v}_{2,k}(:,l)\right)*\mathrm{diag}\left(\mathrm{u}_1(:,l)\right)\\
&= \mathrm{diag}\left(\sum_{i=1}^{N_{2,k}^{l}}a_{2,k,i}^{l}c_{2,k,i}^{l}\right)*\mathrm{diag}\left(\sum_{j=1}^{N_{1}^{l}}a_{1,j}^{l}c_{1,j}^{l}\right)\\
&= \sum_{j=1}^{N_{1}^{l}}\sum_{i=1}^{N_{2,k}^{l}}a_{2,k,i}^{l}a_{1,j}^{l}\,diag\left(c_{2,k,i}^{l}\right)diag\left(c_{1,j}^{l}\right)\\
&= diag\left(\sum_{j=1}^{N_{1}^{l}}\sum_{i=1}^{N_{2,k}^{l}}a_{2,k,i}^{l}a_{1,j}^{l}\left(c_{2,k,i}^{l}\circ c_{1,j}^{l}\right)\right)
\end{aligned} \qquad (6).$$

From the equation of the phase tuning matrix, it can be found that the phase tuning matrix (target tuning information) $\Phi$ may be expressed as a diagonalized form of a vector constructed using a Hadamard product of $v_{2,k}(,l)$ and $u_1(:,l)$. " $\circ$ " represents a Hadamard product operation, and "diag" represents diagonalizing an N-dimensional vector to obtain a diagonal matrix, diagonal elements of which are elements in the vector.

It may be defined that $C = v_{2,k}(:,l) \circ u_1(:,l)$, and then a first vector C can be derived through the above analysis:

$$C = \sum_{j=1}^{N_1^l} \sum_{i=1}^{N_{2,k}^l} a_{2,k,i}^l a_{1,j}^l C_{i,j}^l = \sum_{j=1}^{N_1^l} \sum_{i=1}^{N_{2,k}^l} a_{2,k,i}^l a_{1,j}^l \left( c_{2,k,i}^l \circ c_{1,j}^l \right) \qquad (7).$$

In other words, S1130 is executed to construct the first vector function for characterizing the difference information between the left singular vector information and the right singular vector information. In some embodiments, equation (7) is the first vector function.

By analyzing the above equation, it can be found that the target tuning information Φ may be expressed as a diagonalized form of the first vector C, and the first vector C may be expressed as a linear combination of $C_{i,j}^l$, where $C_{i,j}^l = c_{2,k,i}^l \circ c_{1,j}^l$. It should be noted that if $c_{1,j}^l$ and $c_{2,k,i}^l$ are each a DFT vector or a Kronecker product of DFT vectors, $C_{i,j}^l$ is also a DFT vector or a Kronecker product of DFT vectors. The difference information between $v_{2,k}$ and $u_1$ may be expressed as a linear combination of $C_{i,j}^l$, i.e., feedback of the difference information between $v_{2,k}$ and $u_1$ may be changed into feedback of $C_{i,j}^l$ and weighting coefficient information for linear combination thereof. Therefore, S1140 may be executed to determine a DFT vector corresponding to the first vector function as the target base vector, and S1200 may be executed to process the target base vector by the second preset function (which may be a correspondence function obtained according to the above equation (6)) to obtain the target tuning information Φ.

For example, in some embodiments, in the method proposed in the present disclosure, the first vector $C_t^l$ may be set to a linear combination of DFT vectors (or a Kronecker product of a plurality of DFT vectors). Taking the linear combination of DFT vectors as an example, the first vector $C_t^l$ may be expressed as:

$$C_t^l = \sum_{m \in X_t} A_m * DFT_m^{O,N} \qquad (8)$$

where $A_m$ represents a preset weighting coefficient, and $X_t$ represents a preset set. $A_m$ and $X_t$ may be set separately for each $C_t^l$, for joint measurement feedback. It should be noted that there is an intersection between $X_t$ corresponding to different t.

In other words, in an embodiment, the first communication apparatus can acquire feedback information sent from the second communication apparatus, to obtain a first vector. The first vector is indicative of difference information between the left singular vector information of the first channel and the right singular vector information of the second channel. The first channel is a channel between the first communication apparatus and the intelligent surface. The second channel is a channel between the intelligent surface and the second communication apparatus. Then, the first communication apparatus can obtain target tuning information through calculation according to the first vector, and send the target tuning information to the intelligent surface, to allow the intelligent surface adjusts the electromagnetic unit in the intelligent surface according to the target tuning information. In an embodiment of this scheme, the feedback information is acquired, the first vector capable of characterizing the difference information between the channel information between the first communication apparatus and the intelligent surface and the channel information between the intelligent surface and the second communication apparatus is calculated according to the feedback information, and then the target tuning information for tuning the electromagnetic unit in the intelligent surface is acquired according to the first vector. As such, the operation of acquiring channel information between the first communication apparatus and the intelligent surface and acquiring channel information between the intelligent surface and the second communication apparatus in the related technology does not need to be performed. Therefore, the problem that the intelligent surface cannot perform measurement to obtain channel information due to the requirement for low costs can be avoided, and the performance of the intelligent surface can be fully exerted.

In order to obtain the first vector C, $C_{i,j}^l$ needs to be obtained by pilot measurement. The measurement of the feedback information to obtain $C_{i,j}^l$ will be described below.

If pilot information is sent directly to measure $C_{i,j}^l$, the problems of high pilot resource overheads (because the first communication apparatus needs to send a large amount of pilot information) and low measurement efficiency arise.

For example, $T$ number of phase tuning matrices (candidate tuning information) $\Phi_1^{rs}...\Phi_T^{rs}$ may be set, and $\Phi_1^{rs}...\Phi_T^{rs}$ are formed into a set $\mathfrak{R}^{rs}$, where $\Phi_1^{rs}...\Phi_T^{rs}$ are obtained by diagonalizing $N$ number of vectors (including candidate base vectors). It should be noted that the values of $T$ and $N$ may be set according to an actual application scenario, which are not particularly limited in this embodiment.

Then, $C_1^l...C_T^l$ are formed into a set $\xi^{rs}$, where $\xi^{rs}$ is formed by a complete set of DFT vectors or vectors constructed using their Kronecker products.

In order to select an appropriate first vector from the set $C_1^l...C_T^l$, $T$ number of pilot resources are needed, and a phase tuning matrix on the intelligent surface is used for each pilot resource. The phase tuning matrices are respectively $\Phi_1^{rs}...\Phi_K^{rs}$. Then, measurement and feedback are performed based on the $T$ number of pilot resources to select an appropriate $C_{i,j}^l \in \left\{ C_1^l...C_T^l \right\}$.

In other words, in the related method, the first communication apparatus needs to send a pilot to the second communication apparatus for $T$ times and acquire feedback information of $T$ number of pilot resources, in order to measure $C_{i,j}^l$ information.

It should be noted that the DFT vector included in $C_{i,j}^l$ are a type of vector in which the modulus values of elements are the same and phase differences between adjacent elements are a fixed value. For example, the DFT vector may be defined as:

$$C_t^l = DFT_m^{O,N} = \left[ 1 \quad e^{j2\pi \frac{m}{O*N}} \quad ... \quad e^{j2\pi \frac{(N-1)m}{O*N}} \right], t = 1,2..T \qquad (9).$$

It should be noted that the difference between the phases of every two adjacent elements is a fixed value.

It should be noted that in equation (9), N represents the quantity of dimensions of the DFT vector; O represents an oversampling factor, where for example, the oversampling factor is 1 when 0 to $2\pi$ is divided into $N$ number of parts, and the oversampling factor is $O$ when 0 to $2\pi$ is divided into O*N number of parts; and $M$ is an index of the DFT vector, representing the m$^{th}$ DFT vector. Then, a Kronecker product of the two DFT vectors may be expressed as:

$$C_t^l = DFT_{m1}^{O1,\ N1} \otimes DFT_{m2}^{O2,\ N2} \qquad (10).$$

It should be noted that a value range of a phase change gradient of the DFT vector is 0 to $2\pi$, and one DFT vector can be determined by specifying the quantity of dimensions and the phase change gradient of the DFT vector.

It should be noted that the complete DFT vector set means that the range of value of m is 0 to (O*N-1); and may also be extended to the case for values of m1 and m2, i.e., T=O*N, or T=O1*O2*N1*N2.

It should be noted that the phase value of the DFT vector is 0 to $2\pi$, which is a finite set, and the phase value of the DFT vector is associated with the direction of the electromagnetic unit. In some embodiments, the number of parts into which the range 0 to $2\pi$ of the phase value of the DFT vector is divided depends on required system precision. Theoretically, the range 0 to $2\pi$ of the phase value of the DFT vector may be divided into an infinite number of parts, and the system precision in such a case is relatively high. Alternatively, the range 0 to $2\pi$ of the phase value of the DFT vector may be divided into a smaller number of parts, e.g., 2 parts or 4 parts, and the system precision in such a case is relatively low.

In some embodiments, the number of parts into which the range 0 to $2\pi$ of the phase value of the DFT vector is divided is associated with the number of electromagnetic units. For example, the intelligent surface has $N_D$ number of electromagnetic units along a horizontal direction and $N_D$ number of electromagnetic units along a vertical direction. The two dimensions of the horizontal direction and the vertical direction may be independently processed. Finally, a Kronecker product of the DFT vector in the horizontal direction and the DFT vector along the vertical direction is calculated. Taking the horizontal direction as an example, for the $N_D$ number of electromagnetic units along the horizontal direction, the range 0 to $2\pi$ of the phase value of the DFT vector along the horizontal direction needs to be divided into $N_D{*}2$ number of parts to achieve lossless decomposition. For example, if the intelligent surface has 16 electromagnetic units along the horizontal direction and 16 electromagnetic units along the vertical direction, the DFT vector needs to be divided into 16×2 parts along the horizontal direction and 16×2 parts along the vertical direction, i.e., there are 32 pieces of pilot information corresponding to the horizontal direction and 32 pieces of pilot information corresponding to the vertical direction. In this way, for a high-frequency system having a larger number of electromagnetic units, e.g., 10000 electromagnetic units, 20000 pieces of pilot information need to be sent in order to achieve lossless decomposition and synthesis, leading to huge pilot overheads.

From the above analysis, it can be found that this method requires high pilot overheads when the value of $T$ is very large. For example, the number of electromagnetic units in a high-frequency intelligent surface can reach more than 10000, which requires tens of thousands of pilot resources, leading to high pilot overheads. In addition, the pilots need to be sent on different symbols in time, and appropriate target vector information cannot be found before all of the pilots are sent, resulting in a large delay during operation.

In view of the above, according to the method for tuning provided in the embodiments of the present disclosure, indication information is acquired; a measurement and tuning parameter set is determined according to the indication information; and an electromagnetic characteristic of an electromagnetic unit in the device for signal tuning is adjusted according to the measurement and tuning information, such that the electromagnetic unit reflects pilot information to a second communication apparatus, to measure target tuning information of the device for signal tuning. In the embodiments of the present disclosure, the measurement efficiency of tuning information of the device for signal tuning is effectively improved by tuning the electromagnetic characteristic of the electromagnetic unit in the device for signal tuning according to the indication information.

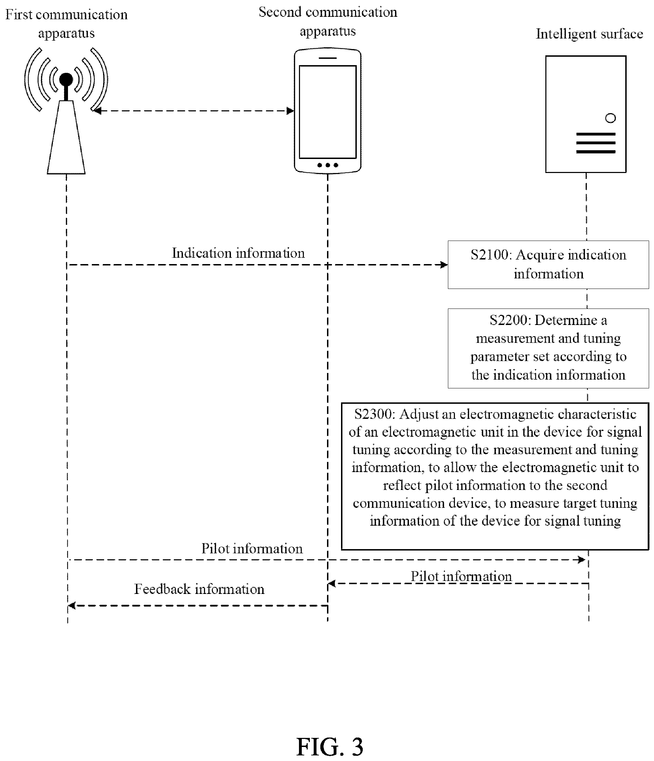

Referring to FIG. 3, a method for tuning for a device for signal tuning is provided, which is applied to a device for signal tuning. The method for tuning includes the following operations S2100 to S2300.

At S2100, indication information is acquired.

At S2200, a measurement and tuning parameter set is determined according to the indication information, where the measurement and tuning parameter set includes measurement and tuning information of a plurality of devices for signal tuning.

At S2300, an electromagnetic characteristic of an electromagnetic unit in the device for signal tuning is adjusted according to the measurement and tuning information, such that the electromagnetic unit reflects pilot information to a second communication apparatus, to measure target tuning information of the device for signal tuning.

In some embodiments, the first vector $C_{\mathrm{t}}^{l}$ may be set to a linear combination of DFT vectors (or a Kronecker product of a plurality of DFT vectors). Taking the linear combination of DFT vectors as an example, the first vector $C_{\mathrm{t}}^{l}$ may be expressed as:

$$C_{\mathrm{t}}^{l} = \sum_{m \in \mathbf{X}_{\mathrm{t}}} A_m * DFT_m^{O,N},$$

where $A_m$ represents a preset weighting coefficient, and $X_{\mathrm{t}}$ represents a preset set. $A_m$ and $X_{\mathrm{t}}$ may be set separately for each $C_{\mathrm{t}}^{l}$, for joint measurement feedback.

It should be noted that there is an intersection between $X_{\mathrm{t}}$ for different t.

It is assumed that $A_m = 1$, i.e., the target base vector is measured and selected first, and then weighted measurement is performed. In practice, information of $C = v_{2,\mathrm{t}}(:,l) \circ u_1(:,l)$ may be acquired by sending pilot information and acquiring feedback information. In the technical scheme of this embodiment, the device for signal tuning executes S1100 to S1300 to send the pilot information to measure the second communication apparatus, and even if $C = v_{2,\mathrm{t}}(:,l) \circ u_1$

(:,*l*) includes only one DFT vector component, more than one of measurement results of a plurality of pieces of pilot information indicate detection of a received power that is not weak. In other words, in an embodiment of the present disclosure, the pilot information is pre-coded according to the measurement and tuning parameter set, and if the first vector includes a corresponding DFT vector in the measurement and tuning parameter set, a receiving end (the second communication apparatus) should be able to detect a received power with satisfactory quality. Therefore, the measurement and tuning parameter set can be reasonably configured according to the indication information, to reduce the number of times of transmitting the pilot information. In the related technology, if the components of $C = v_{2,t}(:,l) \circ u_1(:,l)$ are sparse, the pilots for which a relatively high received power can be received in T measurements are also very sparse, leading to a waste of pilot resources. In intelligent surface applications, generally, the intelligent surface has a large number of electromagnetic units (or referred to as elements or array elements), and is often used in high-frequency cases. In high-frequency cases, because the wavelength is short, more array elements can be deployed, and components of $C = v_{2,t}(:,l) \circ u_1(:,l)$ characterizing the channel information are sparse. Therefore, pilot utilization can be improved by using the method of the technical scheme of this embodiment.

It should be noted that in the embodiments of the present disclosure, the number of DFT vectors representing the first vector $C_t^l$ is not reduced, but the number of pilots used for feedback is reduced by "grouping" at the time of feedback. For example, if the first vector $C_t^l$ includes only one of 16 DFT vectors (candidate base vectors), in the related technology, 16 transmissions of pilot information are needed in order to determine the DFT vector included in the first vector $C_t^l$, while in the embodiments of the present disclosure, with the use of "grouping", the DFT vector included in the first vector $C_t^l$ can be determined by 4 transmission of a pilot, such that the measurement efficiency is improved. In addition, the sparser (fewer) the DFT vectors included in the first vector $C_t^l$, the more significant the effect of improving the measurement efficiency by the embodiments of the present disclosure is.

It should be noted that S2100 to S2300 may be implemented in a controller of the intelligent surface. In S2100, the device for signal tuning may acquire indication information from an external device, for example, indication information from a first communication apparatus (such as a base station) or indication information from the second communication apparatus (such as a user terminal device). It is clear that, the external device may also be other network elements, which is not limited in the embodiments of the present disclosure.

In some embodiments, the target tuning information includes a target base vector. A plurality of pieces of measurement and tuning information in each measurement and tuning parameter set include different candidate base vectors or different combinations of candidate base vectors.

Correspondingly, the operations of tuning an electromagnetic characteristic of an electromagnetic unit in the device for signal tuning according to the measurement and tuning information, such that the electromagnetic unit reflects pilot information to a second communication apparatus, to measure target tuning information of the device for signal tuning at S2300 includes a following operation S2310.

At S2310, the electromagnetic characteristic of the electromagnetic unit in the device for signal tuning is adjusted according to the measurement and tuning information, such that the electromagnetic unit reflects the pilot information to the second communication apparatus, to perform measurement and determine at least one target base vector among a plurality of candidate base vectors according to a result of the measurement.

In other words, in an embodiment of the present disclosure, the pilot information is pre-coded according to the measurement and tuning parameter set, and if the first vector includes a corresponding DFT vector in the measurement and tuning parameter set, the receiving end (the second communication apparatus) should be able to detect a received power with satisfactory quality. The receiving end sends feedback information indicating whether the pilot information is received to the first communication apparatus. The first communication apparatus may calculate a corresponding DFT vector according to the received feedback information, and determine the DFT vector as the target base vector included in the first vector. Therefore, the measurement and tuning parameter set can be reasonably configured according to the indication information, to reduce the number of times of transmitting the pilot information.

In some embodiments, the measurement and tuning parameter set $\mathfrak{R}^{rs}$ may be pre-stored in the device for signal tuning, or may be automatically generated by the device for signal tuning according to the indication information.

In some embodiments, a plurality of measurement and tuning parameter sets $\mathfrak{R}^{rs}$ are pre-stored in the device for signal tuning, and each measurement and tuning parameter set $\mathfrak{R}^{rs}$ includes measurement and tuning information

$\Phi_{N_M}^{\{M\}}$ of a plurality of devices for signal tuning. For example, the plurality of measurement and tuning parameter sets $\mathfrak{R}^{rs}$ are:

$$\mathfrak{R}_1^{rs} = \left\{\Phi_1^{\{1\}}, \ \Phi_2^{\{1\}}, \cdots \Phi_{N_1}^{\{1\}}\right\}$$

$$\mathfrak{R}_2^{rs} = \left\{\Phi_1^{\{2\}}, \ \Phi_2^{\{2\}}, \cdots \Phi_{N_2}^{\{2\}}\right\}$$

$$\ldots$$

$$\mathfrak{R}_M^{rs} = \left\{\Phi_1^{\{M\}}, \ \Phi_2^{\{M\}}, \cdots \Phi_{N_M}^{\{M\}}\right\}.$$

Each measurement and tuning parameter set $\mathfrak{R}^{rs}$ is a preset pattern, corresponding to a certain test model. The first communication apparatus transmits pilot information. The device for signal tuning reflects the pilot information to the second communication apparatus according to the corresponding measurement and tuning parameter set $\mathfrak{R}^{rs}$. The second communication apparatus feeds back a reception status of the pilot information to the first communication apparatus. Then, the first communication apparatus calculates a corresponding target base vector according to the preset pattern. In some embodiments, the measurement and tuning parameter set is sent by the first communication apparatus to the device for signal tuning and stored in the device for signal tuning.

In some embodiments, a plurality of measurement and tuning parameter sets are pre-stored in the device for signal tuning, and the indication information is used for directly indicating index information of the measurement and tuning parameter set.

Correspondingly, determining a measurement and tuning parameter set according to the indication information includes the following operations S2210 to S2220.

At S2210, the index information of the measurement and tuning parameter set is determined according to the indication information.

At S2220, the corresponding measurement control parameter set is determined from the pre-stored plurality of measurement control parameter sets according to the index information.

In an embodiment, a plurality of measurement and tuning parameter sets $\mathfrak{R}^{rs}$ are stored in the intelligent surface, and each measurement and tuning parameter set $\mathfrak{R}^{rs}$ includes measurement and tuning information $\Phi_{N_M}^{\{M\}}$ of a plurality of devices for signal tuning. For example, the plurality of measurement and tuning parameter sets $\mathfrak{R}^{rs}$ are:

$$\mathfrak{R}_1^{rs} = \left\{\Phi_1^{\{1\}}, \ \Phi_2^{\{1\}}, \cdots \Phi_{N_1}^{\{1\}}\right\}$$

$$\mathfrak{R}_2^{rs} = \left\{\Phi_1^{\{2\}}, \ \Phi_2^{\{2\}}, \cdots \Phi_{N_2}^{\{2\}}\right\}$$

$$\ldots$$

$$\mathfrak{R}_M^{rs} = \left\{\Phi_1^{\{M\}}, \ \Phi_2^{\{M\}}, \cdots \Phi_{N_M}^{\{M\}}\right\}.$$

The indication information is used for directly indicating index information of the measurement and tuning parameter set. After receiving the indication information, the device for signal tuning (such as the intelligent surface) finds the pre-stored corresponding measurement and tuning parameter set according to the index information in the indication information. In other words, the device for signal tuning learns in advance from the indication information that the target tuning information only exists in the measurement and tuning parameter set $\mathfrak{R}^{rs}$ corresponding to the index information. As such, a large amount of pilot resources can be saved as compared with the method requiring sending of all the measurement and tuning information.

In some embodiments, a plurality of measurement and tuning parameter sets and a preset correspondence table are pre-stored in the device for signal tuning.

The indication information includes base vector prior information, and the correspondence table includes a correspondence between the base vector prior information and the plurality of measurement and tuning parameter sets.
Correspondingly, the operation of determining a measurement and tuning parameter set according to the indication information at S2200 includes a following operation S2230.
At S2230, the correspondence table is queried according to the base vector prior information to determine the corresponding measurement and tuning parameter set.

In an embodiment, a plurality of measurement and tuning parameter sets $\mathfrak{R}^{rs}$ are stored in the intelligent surface, and each measurement and tuning parameter set $\mathfrak{R}^{rs}$ includes measurement and tuning information $\Phi_{N_M}^{\{M\}}$ of a plurality of devices for signal tuning. For example, the plurality of measurement and tuning parameter sets $\mathfrak{R}^{rs}$ are:

$$\mathfrak{R}_1^{rs} = \left\{ \Phi_1^{\{1\}}, \quad \Phi_2^{\{1\}}, \cdots \Phi_{N_1}^{\{1\}} \right\}$$

$$\mathfrak{R}_2^{rs} = \left\{ \Phi_1^{\{2\}}, \quad \Phi_2^{\{2\}}, \cdots \Phi_{N_2}^{\{2\}} \right\}$$

...

$$\mathfrak{R}_M^{rs} = \left\{ \Phi_1^{\{M\}}, \quad \Phi_2^{\{M\}}, \cdots \Phi_{N_M}^{\{M\}} \right\}.$$

In some embodiments, the indication information includes base vector prior information, and the base vector prior information may include a vector quantity and/or a vector distribution range, etc. The vector quantity is indicative of a quantity or quantity range of the candidate base vectors, and the vector distribution range is indicative of a distribution range of the candidate base vectors.
For example, the base vector prior information may include the vector quantity, i.e., the first communication apparatus or the second communication apparatus may notify the device for signal tuning about the quantity (number) of target base vectors. The specific form of notification is not limited. The vector quantity allows the device for signal tuning to know how many pilots should be sent and how to send them. For example, according to an agreement between the first communication apparatus and the device for signal tuning, a vector quantity of 1 indicates that there is only one multipath, i.e., there is only one target base vector, and the device for signal tuning sends only the measurement and tuning parameter set $\mathfrak{R}^{rs}$ corresponding to the target base vector of 1, and does not need to send all the measurement and tuning information. For another example, the base vector prior information may include the vector distribution range. According to the above description, the phase distribution range of the DFT vector is 0 to $2\pi$. In some embodiments, the phase distribution range of the DFT vector may be a smaller range, such as 0 to $2/\pi$, so the device for signal tuning does not need to send all vectors, but only needs to send the measurement and tuning parameter set $\mathfrak{R}^{rs}$ matching the phase distribution range of 0 to $2/\pi$, and does not need to send all the measurement and tuning information.
It should be noted that the number of DFT vectors (vector quantity) included in the first vector is correlated to the number of channel paths. In some embodiments, the number of DFT vectors (vector quantity) is equal to the number of the channel paths. For example, if the number of DFT vectors (vector quantity) included in the first vector is 1, the number of channel paths is also 1 (e.g., there is only one LOS path). If the number of DFT vectors (vector quantity) is 2, the number of channel paths is also 2 (e.g., there are one LOS path and one NLOS path (reflection path)).

For example, the intelligent surface may determine the measurement and tuning parameter set $\mathfrak{R}^{rs}$ from Table II according to prior information such as the vector quantity or the vector distribution range.

Table II

| | Base vector quantity = 1 | Base vector quantity = 2 | Base vector quantity > 2 |
|---|---|---|---|
| Base vector distribution range 1 | $\mathfrak{R}_{11}^{rs}$ | $\mathfrak{R}_{12}^{rs}$ | $\mathfrak{R}_{1x}^{rs}$ |
| Base vector distribution range 2 | $\mathfrak{R}_{21}^{rs}$ $\mathfrak{R}_{22}^{rs}$ | | $\mathfrak{R}_{2x}^{rs}$ |
| .... | .... | .... | .... |

(continued)

| | Base vector quantity = 1 | Base vector quantity = 2 | Base vector quantity > 2 |
|---|---|---|---|
| Base vector distribution range X | $\mathfrak{R}_{x1}^{rs}$ | $\mathfrak{R}_{x2}^{rs}$ | $\mathfrak{R}_{xx}^{rs}$ |

It can be seen from Table II that when the indication information indicates a base vector quantity of 1 and a base vector distribution range of 2, the corresponding measurement and tuning parameter set sent by the device for signal tuning in the measurement process is $\mathfrak{R}_{21}^{rs}$, and so on.

In some embodiments, the indication information includes base vector prior information.

Correspondingly, the operation of determining a measurement and tuning parameter set according to the indication information at S2200 includes a following operation S2240.

At S2240, the measurement and tuning parameter set is generated by means of a first preset rule according to the base vector prior information.

In some embodiments, the measurement and tuning parameter set may be automatically generated by the device for signal tuning according to the indication information. For example, a method for generating a measurement and tuning parameter set may be pre-stored in the device for signal tuning, and the device for signal tuning generates the corresponding measurement and tuning parameter set according to the base vector prior information (such as the vector quantity and/or the vector distribution range, etc.).

In some embodiments, the base vector prior information includes at least one of a vector quantity or a vector distribution range, where the vector quantity is indicative of a quantity or quantity range of the candidate base vectors, and the vector distribution range is indicative of a distribution range of the candidate base vectors. The first preset rule includes: a quantity $N$ of pieces of measurement and tuning information in the measurement and tuning parameter set satisfies:

$$N \geq \frac{\log_2 M}{Q};$$

where $Q$ represents a number of bits of feedback information from the second communication apparatus in response to the pilot information, and M represents a number of possibilities of combinations of the candidate base vectors.

As described above, each measurement and tuning parameter set $\mathfrak{R}^{rs}$ is a preset pattern, corresponding to a certain test model. The pattern may be designed according to resolution corresponding to a desired situation.

Assuming that there are a total of 16 candidate DFT vectors (candidate base vectors) (for example, the range of 0 to $2\pi$ of the DFT vectors is divided into 16 parts), when the vector quantity is 1 or 2, the corresponding pattern needs to include all measurement and tuning information with the vector quantity of 1 or 2. When the vector quantity is 1, one of the 16 DFT vectors needs to be selected as the target base vector, with $C_{16}^1 = 16$ possible combinations. When the vector quantity is 2, two of the 16 DFT vectors need to be selected as the target base vectors, with $C_{16}^2 = 120$ possible combinations. The total number of possible combinations including all measurement and tuning information with the vector quantity of 1 or 2 is: $M=16+120=136$. In other words, theoretically, the number N of times of transmissions the pilot information (the quantity N of pieces of measurement and tuning information) needs to be able to cover 136 cases. Assuming that the number of bits $Q$ of the feedback information is 1, because one bit can represent two states, 2 to the 7th power is 128, which is less than 136, and 2 to the 8th power is 256, which is greater than 136, the value of $N$ may be correspondingly set to 8, i.e., the quantity of pieces of measurement and tuning information is $N=8$. The requirement of obtaining the target base vector by testing can be met by only 8 transmissions of the pilot information, instead of 136 transmissions of the pilot information. In some other embodiments, if some of the 136 cases can be determined to be impossible, these cases may be excluded, such that the number M of possible combinations including all measurement and tuning information with the vector quantity of 1 or 2 is controlled to be not greater than 128. In this case, the requirement of obtaining the target base vector by testing can be met by 7 transmissions of the pilot information, i.e., the quantity of pieces of measurement and tuning information is N=7. Through the coordinated design of pattern and prior information (indication information), the quantity of pieces of measurement and tuning information can be reduced, thus reducing the number of transmissions of the pilot. In this case, the second communication apparatus is required to send feedback information to the first communication apparatus regardless of whether or not the second communication apparatus has received a signal at the measurement time point of the pilot information.

In some embodiments, when the number of bits $Q$ of the feedback information is a positive integer equal to or greater than 2, the feedback information can represent a plurality of states, so the number of times the pilot information needs to be sent is reduced. For example, when $Q$ is 4, the quantity $N$ of pieces of measurement and tuning information only needs to satisfy $N \geq \frac{\log_2 M}{4}$, so pilot overheads can be further reduced.

In some embodiments, the number of bits $Q$ of the feedback information is 1, and the feedback information is indicative of whether the pilot information is received. In other words, the 1-bit information represents "Yes" or "No".

Alternatively, the feedback information has a plurality of bits, i.e., $Q$ is a positive integer greater than or equal to 2, and the feedback information may be indicative of one or more of the following information: whether the pilot information is received, a signal strength of the received pilot information, and a phase of the received pilot information.

In some embodiments, the sparser (fewer) the DFT vectors included in the first vector $C_t^l$, the more significant the effect of improving the measurement efficiency according to various embodiments of the present disclosure is. As described above, for an intelligent surface having a fixed number of electromagnetic units, the precision of DFT vector division is determined. After the precision of DFT vector division is determined, the number of pilots to be sent depends on the number of DFT vectors included in the first vector $C_t^l$. For example, for a system with precision of 16 (e.g., the range of 0 to $2\pi$ of the DFT vectors are divided into 16 parts), if it is determined according to the indication information that the number of DFT vectors included is 1, the DFT vector can be determined by sending four pieces of pilot information. If it is determined according to the indication information that the number of DFT vectors included is 2, the DFT vector can be determined by sending eight pieces of pilot information. For an intelligent surface having 1000 electromagnetic units, if it is determined according to the indication information that the number of DFT vectors included is 1 (in this case, the number of paths in the corresponding physical environment is 1, for example, there is only one LOS path between the first communication apparatus and the second communication apparatus), the method according to an embodiment of the present disclosure only requires sending of 11 pieces of pilot information. Therefore, compared with an existing method requiring sending of 2000 pieces of pilot information, the pilot overheads can be greatly reduced, thereby improving the measurement efficiency.

In some embodiments, a plurality of pieces of measurement and tuning information in each measurement and tuning parameter set include different linear combinations of candidate base vectors.

In the embodiments of the present disclosure, the pilot information is pre-coded according to different linear combinations of candidate base vectors in the measurement and tuning information, and if the first vector includes a corresponding DFT vector in the linear combination, the receiving end (the second communication apparatus) should be able to detect a received power with satisfactory quality. That each measurement and tuning parameter set $\mathfrak{R}^{rs}$ is a preset pattern means that a plurality of pieces of measurement and tuning information are designed to includes different linear combinations of candidate base vectors, such that the DFT vectors included in the first vector $C_t^l$ can be determined according to feedback information corresponding to the combinations.

In some embodiments, a quantity N of pieces of measurement and tuning information in each measurement and tuning parameter set satisfies:

$$N \geq \frac{\log_2 M}{Q};$$

where $Q$ represents a number of bits of feedback information from the second communication apparatus in response to the pilot information, and M represents a number of possibilities of linear combinations of the candidate base vectors.

The design for the quantity N of pieces of measurement and tuning information is as described above, which will not be repeated herein.

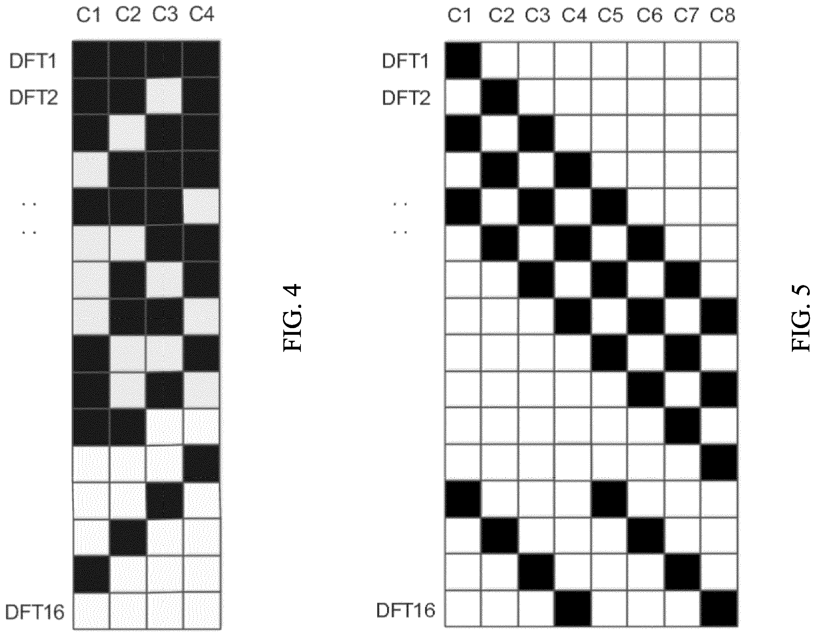

In an embodiment, referring to FIG. 4, preset patterns are shown. It is assumed that $C = v_{2,t}(:,l) \circ u_1(:,l)$ is known to be very sparse, $C = v_{2,t}(:,l) \circ u_1(:,l)$ includes only one DFT vector (target vector information), but the specific DFT vector (target vector information) is unknown. Each black square in FIG. 4 represents a DFT vector (candidate vector information) belonging to a set $X_t$ (numbered in sequence from right to left). For example, C1 includes a linear combination of DFT vectors (candidate vector information) with indices of 1/2/3/5/9/10/11/15. C2 includes a linear combination of DFT vectors (candidate vector information) with indices of 1/2/4/5/7/8/11/14. C3 includes a linear combination of DFT vectors (candidate vector information) with indices of 1/3/4/5/6/8/10/13. C4 includes a linear combination of DFT vectors (candidate vector information) with indices of 1/2/3/4/6/7/9/12. Each $C_t^l$ corresponds to a $\Phi_t^{rs} = diag\left(C_t^l\right)$, based on which an intensity value of a received power can be measured. The second communication apparatus sends a feedback indicating whether a signal is measured or not. The first communication apparatus receives measurement results corresponding to four pilots, and can deduce according to the four measurement results that one DFT vector (target vector information) is included in $C = v_{2,t}(:,l) \circ u_1(:,l)$, and determine which is included the target vector information.

For example, for the preset patterns shown in FIG. 4,

- when the target vector information includes DFT1, the reception status indicates that C1, C2, C3, and C4 each receives a signal, with others being 0;

- when the target vector information includes DFT2, the reception status indicates that C1, C2, and C4 each receives a signal, with others being 0;

- when the target vector information includes DFT3, the reception status indicates that C1, C3, and C4 each receives a signal, with others being 0;

- when the target vector information includes DFT4, the reception status indicates that C2, C3, and C4 each receives a signal, with others being 0;

- when the target vector information includes DFT5, the reception status indicates that C1, C2, and C3 each receives a signal, with others being 0;

- when the target vector information includes DFT6, the reception status indicates that C3 and C4 each receives a signal, with others being 0;

- when the target vector information includes DFT7, the reception status indicates that C2 and C4 each receives a signal, with others being 0;

- when the target vector information includes DFT8, the reception status indicates that C2 and C3 each receives a signal, with others being 0;

- when the target vector information includes DFT9, the reception status indicates that C1 and C4 each receives a signal, with others being 0;

- when the target vector information includes DFT10, the reception status indicates that C1 and C3 each receives a signal, with others being 0;

- when the target vector information includes DFT11, the reception status indicates that C1 and C2 each receives a signal, with others being 0;

- when the target vector information includes DFT12, the reception status indicates that C4 receives a signal, with others being 0;

- when the target vector information includes DFT13, the reception status indicates that C3 receives a signal, with others being 0;

- when the target vector information includes DFT14, the reception status indicates that C2 receives a signal, with others being 0;

- when the target vector information includes DFT15, the reception status indicates that C1 receives a signal, with others being 0; and

- when target vector information includes DFT16, the reception status is that none of C1, C2, C3, and C4 receives a signals, or that signals received by C1, C2, C3, and C4 are all 0.

In an embodiment, referring to FIG. 5, assuming that $C = v_{2,t}(:,l) \circ u_1(:,l)$ is known and includes a linear combination of two DFT vectors (target vector information), eight measurement pilots need to be sent in such a case. Each $C_t^l$ corresponds to a $\Phi_t^{rs} = diag(C_t^l)$, provided that an intensity value of a received power can be measured. The second communication apparatus sends a feedback indicating whether a signal is detected or not. The first communication apparatus receives measurement results corresponding to the eight pilots, and can deduce according to the eight measurement results that two DFT vectors (target vector information) are included in $C = v_{2,t}(.,l) \circ u_1(.,l)$.

For example, for the preset patterns shown in FIG. 5, when the target vector information includes DFT1 and DFT2, the reception status indicates that C1 and C2 each receives a signal, with others being 0; when the target vector information includes DFT1 and DFT3, the reception status indicates that C1 and C3 each receives a signal, with others being 0; when the target vector information includes DFT2 and DFT3, the reception status indicates that C1, C2, and C3 each receives a signal, with others being 0; when the target vector information includes DFT1 and DFT4, the reception status indicates that C1, C2, and C4 each receives a signal, with others being 0; when the target vector information includes DFT2 and DFT4, the reception status indicates that C2 and C4 each receives a signal, with others being 0; when the target vector information includes DFT1 and DFT5, the reception status indicates that C1, C3, and C4 each receives a signal, with others being 0; when the target vector information includes DFT4 and DFT5, the reception status indicates that C1, C2, and C5 each receives a signal, with others being 0; when the target vector information includes DFT2 and DFT5, the reception status indicates that C1, C2, C3, and C5 each receives a signal, with others being 0; and so on.

In some embodiments, referring to the above equation (8), the first vector $C_t^l$ may be formed by synthesis of a plurality of DFT vectors, and it is necessary to further measure a weight coefficient (weighting coefficient) corresponding to each DFT vector for synthesis. The weight coefficient may be measured after the target base vector is obtained through measurement, to provide a more accurate result.

In some embodiments, the target tuning information further includes a weight coefficient.

In some embodiments, the operations of tuning an electromagnetic characteristic of an electromagnetic unit in the device for signal tuning according to the measurement and tuning information, to allow the electromagnetic unit to reflect pilot information to a second communication apparatus, to measure target tuning information of the device for signal tuning at S2300 further include a following operation S2320.

At S2320, the electromagnetic characteristic of the electromagnetic unit in the device for signal tuning is adjusted according to the at least one target base vector, to allow the electromagnetic unit to reflect the pilot information to the second communication apparatus, to measure the weight coefficient (weighting coefficient) corresponding to the at least one target base vector.

In some embodiments, referring to the above equation (8), after S2310 is executed to obtain the target base vector through measurement, S2320 may further be executed to obtain the weighting coefficient $A_m$ to further calculate the first vector $C_t^l$. Generally, the operation of calculating the first vector $C_t^l$ is executed in the first communication apparatus.

In some embodiments, the operations of tuning the electromagnetic characteristic of the electromagnetic unit in the device for signal tuning according to the at least one target base vector, to allow the electromagnetic unit to reflect the pilot information to the second communication apparatus, to measure the weight coefficient corresponding to the at least one target base vector at S2320 include a following operation S2321.

At S2321, the at least one target base vector sent from the first communication apparatus is received, and the electromagnetic characteristic of the electromagnetic unit in the device for signal tuning is adjusted according to the at least one target base vector, to allow the electromagnetic unit to reflect the pilot information to the second communication apparatus, to measure the weight coefficient corresponding to the at least one target base vector.

In some embodiments, after obtaining the target base vector through measurement through the above method, the first communication apparatus may send the target base vector to the device for signal tuning. The device for signal tuning adjusts the electromagnetic characteristic of the electromagnetic unit in the device for signal tuning according to the target base vector, to allow the electromagnetic unit to reflect the pilot information to the second communication apparatus. After receiving the pilot information, the second communication apparatus sends feedback information to the first communication apparatus, to allow the first communication apparatus to measure a weight coefficient corresponding to the target base vector. It should be noted that in the process of measuring the weight coefficient, the feedback information should typically include more specific information, such as received signal strength information, phase information, etc.

For example, there are 16 candidate base vectors in total, and the fifth DFT vector and the tenth DFT vector are obtained as the target base vectors through measurement using the above method. In this case, the pilot information may be sent on beams corresponding to the fifth DFT vector and the tenth DFT vector. After receiving the pilot information, the second communication apparatus sends the feedback information to the first communication apparatus, to allow the first communication apparatus to calculate weight coefficients corresponding to the two target base vectors according to the feedback information. For example, signal strength in the feedback information may be used as the weight coefficient.

It should be noted that when there is only one target base vector, it is not necessary to measure the weighting coefficient, because the first vector in this case is not a linear combination of base vectors.

According to the method for tuning provided in an embodiment of the present disclosure, indication information is acquired; a measurement and tuning parameter set is determined according to the indication information, to allow an electromagnetic unit to reflect pilot information to a second communication apparatus, to measure target tuning information of the device for signal tuning. In the embodiments of the present disclosure, the measurement efficiency of tuning information of the device for signal tuning is effectively improved by tuning the electromagnetic characteristic of the electromagnetic unit in the device for signal tuning according to the indication information.

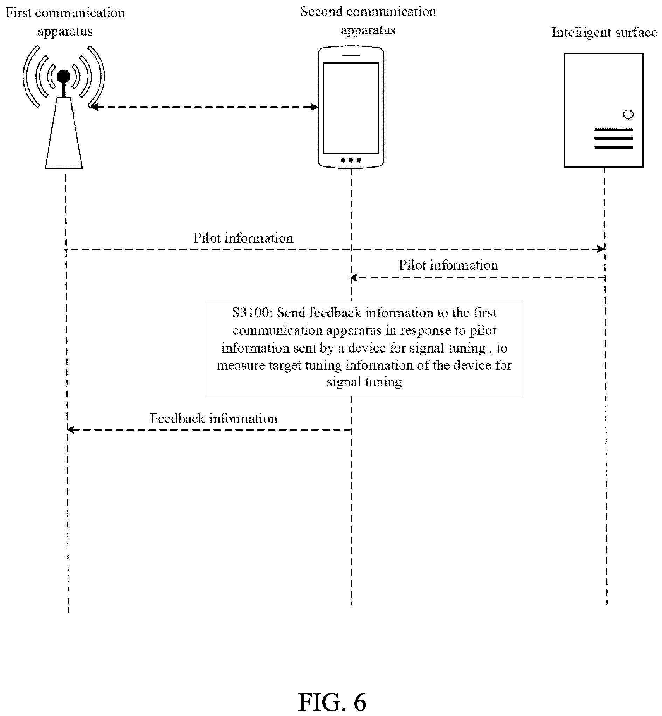

In addition, referring to FIG. 6, an embodiment of the present disclosure provides a method for information processing. The method is applied to a second communication apparatus. The method includes a following operation S3100.

At S3100, feedback information is sent to a first communication apparatus in response to pilot information sent by a device for signal tuning, to measure target tuning information of the device for signal tuning.

The pilot information is sent by the device for signal tuning by executing the method for tuning for a device for signal tuning. For example, the pilot information is sent by the device for signal tuning by executing the above operations S2100 to S2300.

It should be noted that the second communication apparatus may be a user terminal device. The user terminal device may be a mobile user terminal device or a non-mobile user terminal device. The mobile user terminal device may be a mobile phone, a tablet computer, a notebook computer, a handheld computer, a vehicle-mounted user terminal device, a wearable device, a super mobile personal computer, a netbook, a personal digital assistant, a Customer Premise Equipment (CPE), a wireless hotspot device (UFI), etc. The non-mobile user terminal device may be a personal computer, a television, a teller machine, a self-service machine, etc., which is not limited in the embodiments of the present disclosure.

In some embodiments, the first communication apparatus transmits pilot information. The signal tuning apparatus reflects the pilot information to the second communication apparatus according to the measurement and tuning parameter set $\mathfrak{R}^{rs}$ corresponding to the indication information. The second communication apparatus feeds back a reception status of the pilot information to the first communication apparatus. Then, the first communication apparatus calculates a corresponding target base vector according to the preset pattern. The second communication apparatus needs to send feedback information to the first communication apparatus regardless of whether or not the second communication apparatus has received the pilot information at the measurement time point of the pilot information.

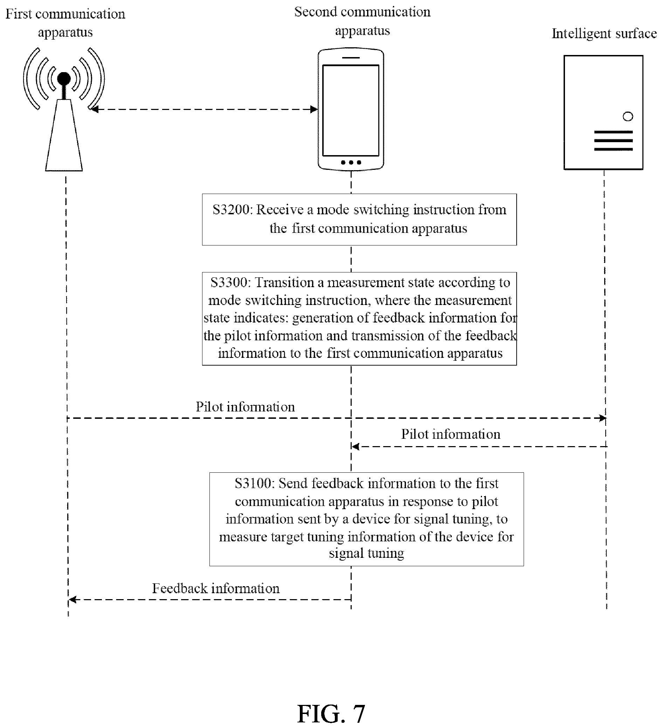

Referring to FIG. 7, in some embodiments, before the operations of sending feedback information to a first communication apparatus in response to pilot information sent by a device for signal tuning, to measure target tuning information of the device for signal tuning at S3100 are performed, the method further includes the following operations S3200 to S3300.

At S3200, a mode switching instruction from the first communication apparatus is received.

At S3300, a measurement state is entered according to the mode switching instruction, where the measurement state indicates: generation of feedback information for each pilot information and transmission of the feedback information to the first communication apparatus.

In some embodiments, because resource (such as energy resource, computing resource, etc.) overheads of the second communication apparatus are increased if the second communication apparatus needs to send a feedback for every piece of pilot information in the process of measuring the target tuning information, a mode switching instruction may be used to change a feedback status of the second communication apparatus, i.e., the second communication apparatus enters the measurement state only upon receiving the mode switching instruction, so as to reduce resource overheads of the second communication apparatus. The mode switching instruction may be from the first communication apparatus or another device, which is not limited in the embodiments of the present disclosure.

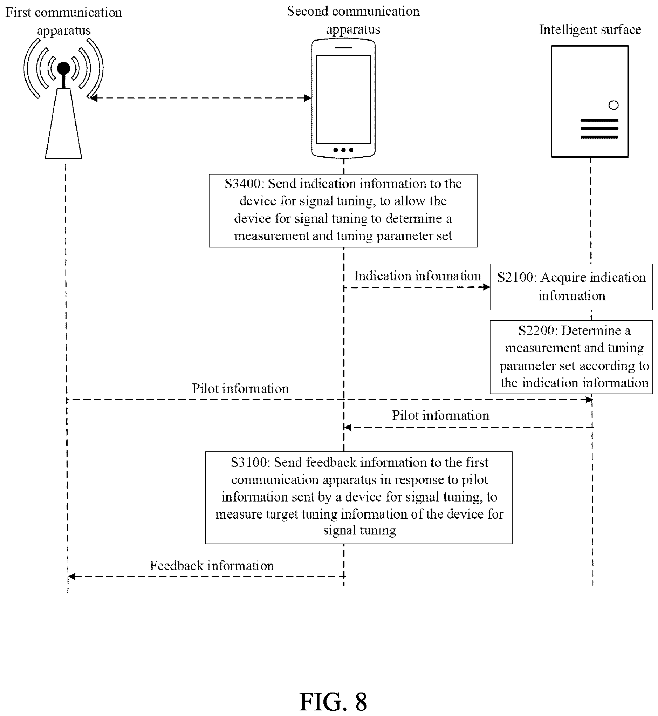

Referring to FIG. 8, in some embodiments, before the operations of sending feedback information to a first communication apparatus in response to pilot information sent by a device for signal tuning, to measure target tuning information of the device for signal tuning at S3100 is performed, the method further includes a following operation S3400.

At S3400, indication information is sent to the device for signal tuning, to allow the device for signal tuning to determine a measurement tuning parameter set.

In some embodiments, the second communication apparatus may be configured for sending indication information to the device for signal tuning, to allow the device for signal tuning to execute the above operations to determine a measurement and tuning parameter set. For example, the device for signal tuning executes the above operations S2100 and S2200 to determine the measurement and tuning parameter set.

According to the method for information processing provided in an embodiment of the present disclosure, in a measurement state, feedback information is sent to a first communication apparatus in response to pilot information sent by a device for signal tuning, to measure target tuning information of the device for signal tuning. The pilot information is sent by the device for signal tuning by executing the method for tuning for a device for signal tuning. In various embodiments of the present disclosure, the measurement efficiency of tuning information of the device for signal tuning is effectively improved by tuning the electromagnetic characteristic of the electromagnetic unit in the device for signal tuning according to the indication information.

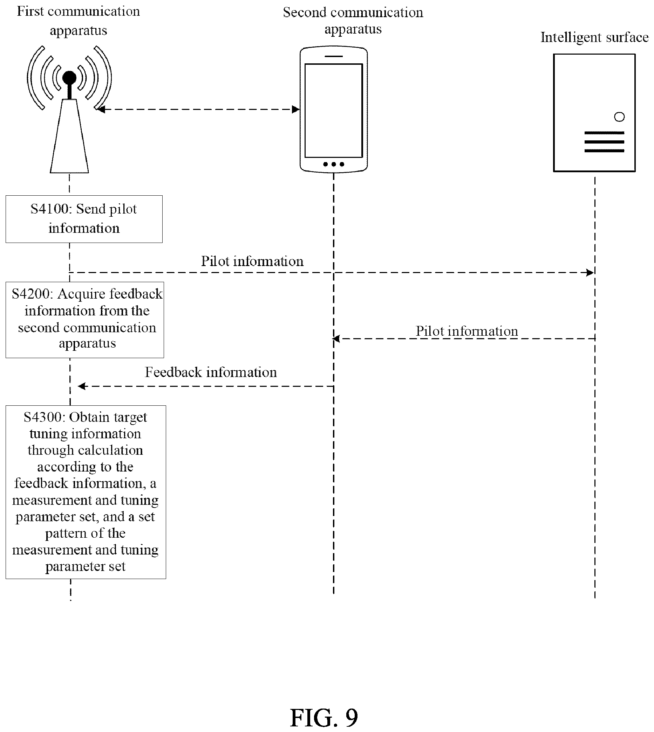

In addition, referring to FIG. 9, an embodiment of the present disclosure provides a method for information processing. The method is applied to a first communication apparatus. The method includes the following operations S4100 to S4300.

At S4100, pilot information is sent, to allow the device for signal tuning to reflect the pilot information to a second communication apparatus by executing the method for tuning for a device for signal tuning. For example, the device for signal tuning reflects the pilot information to the second communication apparatus by executing the above operations S2100 to S2300.

At S4200, feedback information from the second communication apparatus is acquired.

At S4300, target tuning information is obtained through a calculation according to the feedback information, a measurement and tuning parameter set, and a set pattern of the measurement and tuning parameter set.

In some embodiments, the first communication apparatus may be a base station or any other device having a network service function, which is not limited in the embodiments of the present disclosure. It can be understood by those having ordinary skills in the art that the base station is an interface device for mobile devices to access the Internet, is also a form of a radio station, and is a radio transceiver station that performs information transmission with a mobile phone terminal through a mobile communication switching center in a certain radio coverage area. For example, the base station may be a BTS in a GSM or CDMA system, a NodeB (NB) in a W-CDMA system, an Evolutional Node B (eNodeB) in an LTE system, a 5G base station, or a base station corresponding to a future evolved network.

In some embodiments, the first communication apparatus transmits pilot information. The device for signal tuning reflects the pilot information to the second communication apparatus according to the measurement and tuning parameter set $\mathfrak{R}^{rs}$ corresponding to the indication information. The second communication apparatus feeds back a reception status of the pilot information to the first communication apparatus through feedback information in response to the pilot information. Then, the first communication apparatus calculates a corresponding target base vector according to the preset pattern. The second communication apparatus needs to send feedback information to the first communication apparatus at the moment when the pilot information is sent, regardless of whether or not the second communication apparatus has received the pilot information.

In some embodiments, in S4300, the first communication apparatus needs to learn the measurement and tuning parameter set and the set pattern of the measurement and tuning parameter set in order to obtain the target adjustment information through calculation according to the feedback information received from the second communication apparatus.

In some embodiments, the set pattern of the measurement and tuning parameter set may be generated according to the pattern design method described in the above method for tuning for a device for signal tuning, such that each measurement and tuning parameter set $\mathfrak{R}^{rs}$ is a preset pattern, which correspondes to a certain test model. The pattern may be designed according to resolution corresponding to a desired situation, and the details will not be repeated here.

In some embodiments, the measurement and tuning parameter set is sent by the first communication apparatus to the device for signal tuning and stored in the device for signal tuning.

In some embodiments, the target tuning information includes a target base vector. A plurality of pieces of measurement and tuning information in the measurement and tuning parameter set include different candidate base vectors or different combinations of candidate base vectors.

Correspondingly, the operation of obtaining target tuning information through the calculation according to the feedback information, a measurement and tuning parameter set, and a set pattern of the measurement and tuning parameter set at S4310 includes a following operation S4310.

At S4310, at least one target base vector is determined among a plurality of candidate base vectors according to the feedback information, the measurement and tuning parameter set, and the set pattern of the measurement and tuning parameter set.

In some embodiments, the first vector $C_t^l$ may be set to a linear combination of DFT vectors (or a Kronecker product of a plurality of DFT vectors). Taking the DFT vectors as an example, the first vector $C_t^l$ may be expressed as:

$$C_t^l = \sum_{m \in X_t} A_m * DFT_m^{O,N},$$

where $A_m$ represents a preset weighting coefficient, and $X_t$ represents a preset set. $A_m$ and $X_t$ may be set separately for each $C_t^l$, for joint measurement feedback.

It should be noted that there is an intersection between $X_t$ corresponding to different t.

It is assumed that $A_m$ =1, i.e., the target base vector is measured and selected first, and then weighted measurement is performed. In practice, the first communication apparatus may acquire information of $C = v_{2,t}(:,l) \circ u_1(:,l)$ by sending pilot information and acquiring feedback information. In the technical scheme of an embodiment, the device for signal tuning executes the above operations S1100 to S1300 to reflect the pilot information to the second communication apparatus for measurement, and even if $C = v_{2,t}(:,l) \circ u_1(:,l)$ includes only one DFT vector component, more than one of measurement results of a plurality of pieces of pilot information indicate detection of a received power that is not weak. The second communication apparatus returns feedback information to the first communication apparatus at a time point corresponding to the transmission of the pilot information. In other words, in an embodiment of the present disclosure, the pilot information is pre-coded according to the measurement and tuning parameter set, and if the first vector includes a corresponding DFT vector in the measurement and tuning parameter set, the receiving end (the second communication apparatus) should be able to detect a received power with satisfactory quality. Therefore, the first communication apparatus may properly configure a measurement and tuning parameter set for the device for signal tuning according to the indication information, and then determine at least one target base vector among a plurality of candidate base vectors according to the feedback information, the measurement and tuning parameter set, and a set pattern of the measurement and tuning parameter set.

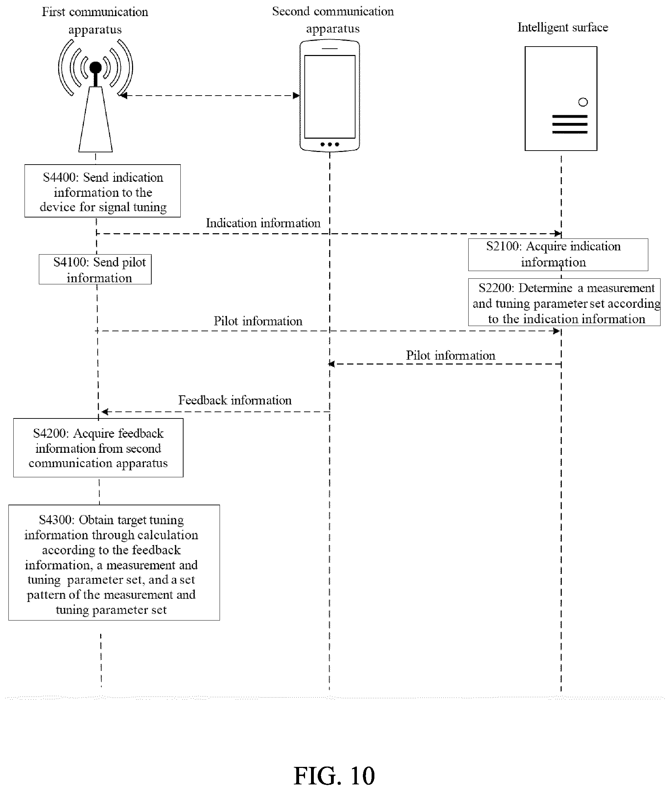

Referring to FIG. 10, in some embodiments, before sending the pilot information at S4100, the method further includes a following operation S4400.

At S4400, indication information is sent to the device for signal tuning, to allow the device for signal tuning to determine the measurement and tuning parameter set.

In some embodiments, the first communication apparatus may be configured for sending indication information to the device for signal tuning, to allow the device for signal tuning to execute the above operations to determine a measurement and tuning parameter set. For example, the device for signal tuning executes the above operations S2100 and S2200 to determine the measurement and tuning parameter set.

In some embodiments, the target tuning information further includes a weight coefficient.

Correspondingly, obtaining target tuning information through calculation according to the feedback information, a measurement and tuning parameter set, and a set pattern of the measurement and tuning parameter set further includes the following operations S4311 to S4313.

At S4311, the pilot information is sent, to allow the device for signal tuning to adjust an electromagnetic characteristic of an electromagnetic unit in the device for signal tuning according to the at least one target base vector, and to reflect the pilot information to the second communication apparatus.

At S4312, feedback information from a terminal device is received.

At S4313, a weight coefficient corresponding to the at least one target base vector is calculated according to the feedback information.

In some embodiments, before sending the pilot information, to allow the device for signal tuning adjusts an electromagnetic characteristic of an electromagnetic unit in the device for signal tuning according to the at least one target base vector, and to reflect the pilot information to the second communication apparatus at S4311, the method further includes a following operation S4314.

At S4314, the at least one target base vector is sent to the device for signal tuning.

In some embodiments, after obtaining the target base vector through measurement using the above method, the first communication apparatus sends the target base vector to the device for signal tuning. The device for signal tuning regulates the electromagnetic characteristic of the electromagnetic unit in the signal tuning apparatus according to the target base vector, to allow the electromagnetic unit to reflect the pilot information to the second communication apparatus. After receiving the pilot information, the second communication apparatus sends feedback information to the first communication apparatus, to allow the first communication apparatus to measure a weight coefficient corresponding to the target base vector. It should be noted that in the process of measuring the weight coefficient, the feedback information should typically include more specific information, such as received signal strength information, phase information, etc.

For example, there are 16 candidate base vectors in total, and the fifth DFT vector and the tenth DFT vector are obtained as the target base vectors through measurement using the above method. The first communication apparatus may send the two target base vectors to the signal tuning apparatus. In this case, the first communication apparatus sends the pilot information. The signal tuning apparatus adjusts the electromagnetic characteristic of the electromagnetic unit in the signal tuning apparatus according to the target base vectors, and reflects the pilot information to the second communication apparatus. As such, the pilot information can be sent on beams corresponding to the fifth DFT vector and the tenth DFT vector. After receiving the pilot information, the second communication apparatus sends the feedback information to the first communication apparatus, to allow the first communication apparatus to calculates weight coefficients corresponding to the two target base vectors according to the feedback information. For example, signal strength in the feedback information may be used as the weight coefficient.

It should be noted that when there is only one target base vector, it is not necessary to measure the weighting coefficient, because the first vector in this case is not a linear combination of base vectors.

In some embodiments, referring to the above equation (8), the first vector $C_t^l$ may be formed by synthesis of a plurality of DFT vectors, and it is necessary to further measure a weight coefficient (weighting coefficient) corresponding to each DFT vector for synthesis. The weight coefficient may be measured after the target base vector is obtained through measurement, to provide a more accurate result.

In some embodiments, referring to the above equation (8), after S4310 is executed to obtain the target base vector through measurement, S4311 to 4313 may further be executed to obtain the weighting coefficient $A_m$ to further calculate the first vector $C_t^l$. Generally, the operation of calculating the first vector $C_t^l$ is executed in the first communication apparatus.

According to the method for information processing provided in various embodiments of the present disclosure, pilot information is sent, to allow the signal tuning apparatus to reflect the pilot information to a second communication apparatus by executing the method for tuning for a device for signal tuning; feedback information from the second communication apparatus is acquired; and target tuning information is obtained through calculation according to the feedback information, a measurement and tuning parameter set, and a set pattern of the measurement and tuning parameter set. In the embodiments of the present disclosure, the measurement efficiency of tuning information of the device for signal tuning is effectively improved by tuning the electromagnetic characteristic of the electromagnetic unit in the device for signal tuning according to the indication information.

In addition, an embodiment of the present disclosure provides a method for information processing. The method is applied to a communication system including a first communication apparatus, a device for signal tuning, and a second communication apparatus. The method includes:

- executing, by the first communication apparatus, the method for information processing applied to a first communication device;

- executing, by the device for signal tuning, the tuning method for a device for signal tuning; and

- executing, by the second communication apparatus, the method for information processing applied to a second communication device.

In some embodiments, in the communication system, the first communication apparatus may be a base station, the signal tuning apparatus may be an intelligent surface, and the second communication apparatus may be a user terminal device. The architecture of the communication system is as shown in FIG. 1.

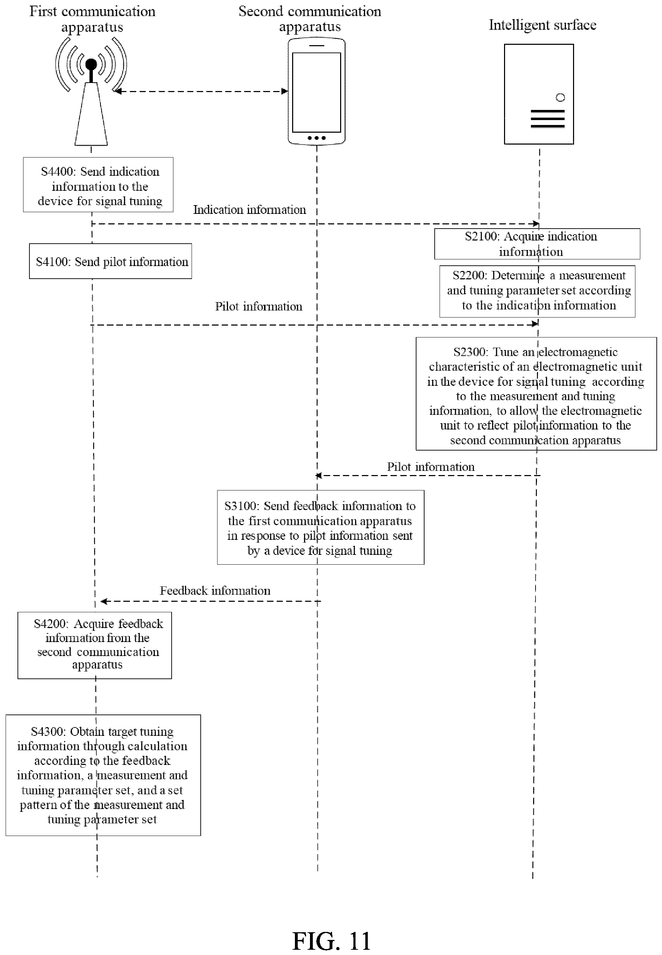

Referring to FIG. 11, in some embodiments, a measurement process of the communication system is as follows. The first communication apparatus executes the above operation S4400 to send indication information to the device for signal tuning, to allow the device for signal tuning to execute the above operations S2100 and S2200 to acquire the indication information and determine a measurement and tuning parameter set according to the indication information. The first communication apparatus executes the above operation S4100 to send pilot information to the signal tuning apparatus. The signal tuning apparatus executes the above operation S2300 to tune an electromagnetic characteristic of an electromagnetic unit in the signal tuning apparatus according to the measurement and tuning information, to allow the electromagnetic unit to reflect the pilot information to the second communication apparatus. In the measurement state, the second communication apparatus executes the above operation S3100 to send feedback information to the first communication apparatus in response to the pilot information sent by the device for signal tuning. The first communication apparatus executes the above operations S4200 and S4300 to acquire the feedback information from the second communication apparatus, and obtain target adjustment information through calculation according to the feedback information, the measurement and tuning parameter set, and a set pattern of the measurement and tuning parameter set.

In various embodiments of the present disclosure, the measurement efficiency of adjustment information of the device for signal tuning is effectively improved by tuning the electromagnetic characteristic of the electromagnetic unit in the device for signal tuning according to the indication information.

In addition, an embodiment of the present disclosure provides an apparatus for signal regulation, including: a first memory, a first processor, and a computer program stored in the first memory and executable by the first processor, where the computer program, when executed by the first processor, causes the first processor to implement the method for signal tuning as described.

The first processor and the first memory may be connected by a bus or in other ways.

The first memory, as a non-transitory computer-readable storage medium, may be configured for storing a non-transitory software program and a non-transitory computer-executable program. In addition, the first memory may include a high-speed random-access memory, and may also include a non-transitory memory, e.g., at least one magnetic disk storage device, flash memory device, or other non-transitory solid-state storage device. In some implementations, the first memory may include memories located remotely from the first processor, and the remote memories may be connected to the first processor via a network. Examples of the network include, but not limited to, the Internet, an intranet, a local area network, a mobile communication network, and combinations thereof.

It should be noted that the apparatus for signal tuning in this embodiment may be used as an intelligent surface 120 in the embodiment shown in FIG. 1. The apparatus for signal tuning in this embodiment can constitute a part of the system architecture in the embodiment shown in FIG. 1, and these embodiments all belong to the same concept and therefore have the same implementation principle and technical effects, so the details will not be repeated here.

The non-transitory software program and instructions required to implement the method for information processing of the foregoing embodiments are stored in the memory which, when executed by the processor, cause the processor to implement the tuning method of the foregoing embodiments, for example, implement the method operations S2100 to S2300 in FIG. 3.

In addition, an embodiment of the present disclosure provides a communication apparatus, including: a second memory, a second processor, and a computer program stored in the second memory and executable by the second processor, where the computer program, when executed by the second processor, causes the second processor to implement:

the method for information processing applied to a first communication apparatus, or the method for information processing applied to a second communication apparatus.

The second processor and the second memory may be connected by a bus or in other ways.

The second memory, as a non-transitory computer-readable storage medium, may be configured for storing a non-transitory software program and a non-transitory computer-executable program. In addition, the second memory may include a high-speed random-access memory, and may also include a non-transitory memory, e.g., at least one magnetic disk storage device, flash memory device, or other non-transitory solid-state storage device. In some implementations, the second memory may include memories located remotely from the second processor, and the remote memories may be connected to the second processor via a network. Examples of the network include, but not limited to, the Internet, an intranet, a local area network, a mobile communication network, and combinations thereof.

It should be noted that the communication apparatus in this embodiment may be used as a first communication apparatus or a second communication apparatus. When the communication apparatus is used as the first communication apparatus, it may be the base station 110 in the embodiment shown in FIG. 1. When the communication apparatus is used as the second communication apparatus, it may be the user terminal device 130 in the embodiment shown in FIG. 1. In other words, the device for signal tuning in this embodiment can constitute a part of the system architecture in the embodiment shown in FIG. 1, and these embodiments all belong to the same concept and therefore have the same implementation principle and technical effects, so the details will not be repeated here.

The non-transitory software program and instructions required to implement the method for information processing of the foregoing embodiments are stored in the memory which, when executed by the processor, cause the processor to implement the method for information processing of the foregoing embodiments, for example, implement the method operation S3100 in FIG. 6, the method operations S3200 to S3100 in FIG. 7, the method operations S3400 to S3100 in FIG. 8, or the method operations S4100 to S4300 in FIG. 9.

The communication apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing a computer-executable instruction which, when executed by a processor or controller, for example, by a processor in the communication apparatus embodiment described above, may cause the processor to implement the tuning method of the foregoing embodiments, for example, implement the method operations S2100 to S2300 in FIG. 3; or implement the method for information processing of the foregoing embodiments, for example, implement the method operation S3100 in FIG. 6, the method operations S3200 to S3100 in FIG. 7, the method operations S3400 to S3100 in FIG. 8, or the method operations S4100 to S4300 in FIG. 9.

Those having ordinary skills in the art can understand that all or some of the operations in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable, and non-removable media implemented in any method or technology for storage of information (such as computer-readable instructions, data structures, program modules, or other data). The computer storage medium includes, but is not limited to, a Random Access Memory (RAM), a Read-Only Memory (ROM), an Electrically Erasable Programmable Read-Only Memory (EEPROM), a flash memory or other memory technology, a compact disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or substitution without departing from the scope of the present disclosure. Such equivalent modifications or substitution fall within the scope defined by the claims of the present disclosure.

**Claims**

1. A method for tuning for a device for signal tuning, the method comprising:

   acquiring indication information;
   determining at least one measurement and tuning parameter set according to the indication information, wherein the at least one measurement and tuning parameter set comprises measurement and tuning information of a plurality of devices for signal tuning comprising the device for signal tuning; and
   tuning an electromagnetic characteristic of an electromagnetic unit in the device for signal tuning according to the measurement and tuning information, to allow the electromagnetic unit to reflect pilot information to a second communication apparatus, to measure the target and tuning information of the device for signal tuning.

2. The method as claimed in claim 1, wherein:

   the target and tuning information comprises a target base vector; and
   a plurality of pieces of measurement and tuning information are included in each of the at least one measurement and tuning parameter set, and comprise different candidate base vectors or different combinations of a plurality of candidate base vectors; and
   tuning the electromagnetic characteristic of the electromagnetic unit in the device for signal tuning according to the measurement and tuning information, to allow the electromagnetic unit to reflect the pilot information to the second communication apparatus, to measure the target and tuning information of the device for signal tuning comprises:
   tuning the electromagnetic characteristic of the electromagnetic unit in the device for signal tuning according to the measurement and tuning information, to allow the electromagnetic unit to reflect the pilot information to the second communication apparatus, to perform measurement and determine at least one target base vector among the plurality of candidate base vectors according to a result of the measurement, wherein the at least one target base vector comprises the target base vector.

3. The method as claimed in claim 2, wherein a plurality of measurement and tuning parameter sets are pre-stored in the device for signal tuning, and the indication information directly indicative of index information of each of the plurality of measurement and tuning parameter sets and the pre-stored plurality of measurement adjustment parameter sets comprise the measurement and tuning parameter set; and
   correspondingly, determining the measurement and tuning parameter set according to the indication information comprises:

   determining the index information of the measurement and tuning parameter set according to the indication information; and
   determining the measurement and tuning parameter set from the pre-stored plurality of measurement and tuning parameter sets according to the index information.

4. The method as claimed in claim 2, wherein:

a plurality of measurement and tuning parameter sets and a preset correspondence table are pre-stored in the device for signal tuning, and the pre-stored plurality of measurement and tuning parameter sets comprise the measurement and tuning parameter set;

the indication information comprises base vector prior information, and the correspondence table comprises a correspondence between the base vector prior information and the plurality of measurement and tuning parameter sets; and

correspondingly, determining the measurement and tuning parameter set according to the indication information comprises:

querying the correspondence table according to the base vector prior information to determine the measurement and tuning parameter set.

5. The method as claimed in claim 4, wherein the base vector prior information comprises at least one of, a vector quantity, or a vector distribution range, wherein the vector quantity is indicative of a quantity or quantity range of the candidate base vectors, and the vector distribution range is indicative of a distribution range of the candidate base vectors.

6. The method as claimed in claim 2, wherein:

the indication information comprises base vector prior information; and

correspondingly, determining the measurement and tuning parameter set according to the indication information comprises:

generating the measurement and tuning parameter set by means of a first preset rule according to the base vector prior information.

7. The method as claimed in claim 6, wherein the base vector prior information comprises at least one of a vector quantity or a vector distribution range, wherein the vector quantity is indicative of a quantity or quantity range of the candidate base vectors, and the vector distribution range is indicative of a distribution range of the candidate base vectors.

8. The method as claimed in claims 6 or 7, wherein the first preset rule comprises:

a quantity $N$ of pieces of measurement and tuning information in the measurement and tuning parameter set satisfies:

$$N \geq \frac{\log_2 M}{Q};$$

wherein $Q$ represents a number of bits of feedback information from the second communication apparatus in response to the pilot information, and M represents a number of possibilities of combinations of the candidate base vectors.

9. The method as claimed in any one of claims 2 to 7, wherein the plurality of pieces of measurement and tuning information in each measurement and tuning parameter set comprise different linear combinations of candidate base vectors.

10. The method as claimed in claim 9, wherein a quantity N of pieces of measurement and tuning information in each of the plurality of measurement and tuning parameter sets satisfies:

$$N \geq \frac{\log_2 M}{Q};$$

wherein $Q$ represents a number of bits of feedback information from the second communication apparatus in response to the pilot information, and M represents a number of possibilities of linear combinations of the candidate base vectors.

11. The method as claimed in claim 2, wherein,

the target and tuning information further comprises a weight coefficient; and

tuning the electromagnetic characteristic of the electromagnetic unit in the device for signal tuning according to the measurement and tuning information, to allow the electromagnetic unit to reflect the pilot information to the second communication apparatus, to measure the target and tuning information of the device for signal tuning further comprises:

tuning the electromagnetic characteristic of the electromagnetic unit in the device for signal tuning according to the at least one target base vector, to allow the electromagnetic unit to reflect the pilot information to the second communication apparatus, to measure the weight coefficient corresponding to the at least one target base vector.

12. The method as claimed in claim 11, wherein:

tuning the electromagnetic characteristic of the electromagnetic unit in the device for signal tuning according to the at least one target base vector, to allow the electromagnetic unit to reflect the pilot information to the second communication apparatus, to measure the weight coefficient corresponding to the at least one target base vector comprises:

receiving the at least one target base vector sent from a first communication apparatus, and tuning the electromagnetic characteristic of the electromagnetic unit in the device for signal tuning apparatus according to the at least one target base vector, to allow the electromagnetic unit to reflect the pilot information to the second communication apparatus, to measure the weight coefficient corresponding to the at least one target base vector.

13. The method as claimed in any one of claims 1, 2, 3, 4, 5, 6, 7, 10, 11, or 12, wherein the device for signal tuning is an intelligent surface.

14. A method for information processing, applied to a second communication apparatus, the method comprising:

sending feedback information to a first communication apparatus in response to pilot information sent by a device for signal tuning, to measure target and tuning information of a device for signal tuning,

wherein the pilot information is sent by the device for tuning by carrying out the method as claimed in any one of claims 1 to 13.

15. The method as claimed in claim 14, wherein:

the feedback information contains 1 bit, and the feedback information is indicative of a success or a failure in reception of the pilot information.

or

the feedback information contains a plurality of bits, and the feedback information is indicative of at least one of: the success or the failure in the reception of the pilot information, a signal strength of a received pilot information, or a phase of the received pilot information.

16. The method as claimed in claims 14 or 15, wherein,

a plurality piece of pilot information is present, and the pilot information is one of the plurality piece of pilot information, and

before sending feedback information to the first communication apparatus in response to pilot information sent by the device for signal tuning, to measure the target and tuning information of the device for signal tuning, the method further comprises:

receiving a mode switching instruction from the first communication apparatus;

transitioning to a measurement state according to the mode switching instruction, wherein the measurement state indicates: generation of the feedback information for each of the plurality pieces of the pilot information and sending the feedback information to the first communication apparatus.

17. The method as claimed in claims 14 or 15, wherein before sending feedback information to the first communication apparatus in response to pilot information sent by the device for signal tuning, to measure the target and tuning information of the device for signal tuning, the method further comprises:

sending indication information to the device for signal tuning, to allow the device for signal tuning to determine a measurement and tuning parameter set.

18. A method for information processing, applied to a first communication apparatus, the method comprising:

# EP 4 518 197 A1

sending pilot information, to allow a device for signal tuning to reflect the pilot information to a second communication apparatus by carrying out the method as claimed in any one of claims 1 to 13;
acquiring feedback information from the second communication apparatus; and
obtaining target and tuning information through calculation according to the feedback information, a measurement and tuning parameter set, and a set pattern of the measurement and tuning parameter set.

19. The method as claimed in claim 18, wherein the target and tuning information comprises a target base vector; a plurality of pieces of measurement and tuning information are included in the measurement and tuning parameter set, and comprise different candidate base vectors or different combinations of candidate base vectors; and correspondingly, obtaining the target and tuning information through calculation according to the feedback information, the measurement and tuning parameter set, and the set pattern of the measurement and tuning parameter set comprises:
determining at least one target base vector among a plurality of candidate base vectors according to the feedback information, the measurement and tuning parameter set, and the set pattern of the measurement and tuning parameter set.

20. The method as claimed in claim 19, wherein before sending the pilot information, the method further comprises:
sending indication information to the device for signal tuning, to allow the device for signal tuning to determine the measurement and tuning parameter set.

21. The method as claimed in claim 19, wherein the target tuning information further comprises a weight coefficient; and correspondingly, obtaining the target tuning information through calculation according to the feedback information, the measurement and tuning parameter set, and the set pattern of the measurement and tuning parameter set further comprises:

sending the pilot information, to allow the device for signal tuning to tune an electromagnetic characteristic of an electromagnetic unit in the device for signal tuning according to the at least one target base vector, and to reflect the pilot information to the second communication apparatus;
receiving feedback information from a terminal device; and
calculating a weight coefficient corresponding to the at least one target base vector according to the feedback information.

22. The method as claimed in claim 21, wherein before sending the pilot information, to allow the device for signal tuning to tune the electromagnetic characteristic of the electromagnetic unit in the device for signal tuning according to the at least one target base vector, and to reflect the pilot information to the second communication apparatus, the method further comprises:
sending the at least one target base vector to the device for signal tuning.

23. A method for information processing, applied to a communication system comprising a first communication apparatus, a device for signal tuning, and a second communication apparatus, the method comprising:

performing, by the first communication apparatus, the method as claimed in any one of claims 18 to 22;
performing, by the device for signal tuning, the method as claimed in any one of claims 1 to 13; and
performing, by the second communication apparatus, the method as claimed in any one of claims 14 to 17.

24. A method for information processing, applied to a first communication apparatus, the method comprising:

determining at least one target base vector, wherein the target base vector is information obtained by processing first channel information and second channel information through a first preset function, and is indicative of a difference between the first channel information and the second channel information, the first channel is a channel between the first communication apparatus and a device for signal tuning, and the second channel is a channel between the device for signal tuning and the second communication apparatus; and
processing the target base vector by a second preset function to obtain target tuning information.

25. The method as claimed in claim 24, wherein:
determining at least one target base vector, wherein the target base vector is information obtained by processing first channel information and second channel information through the first preset function, and is indicative of the difference between the first channel information and the second channel information, comprises:

performing left singular vector transformation on the first channel to obtain left singular vector information;
performing right singular vector transformation on the second channel to obtain right singular vector information;
constructing a first vector function indicative of difference information between the left singular vector information and the right singular vector information; and
determining a Discrete Fourier Transform (DFT) vector corresponding to the first vector function as the target base vector.

26. The method as claimed in claim 25, wherein processing the target base vector by the second preset function to obtain target tuning information comprises:

acquiring a weight coefficient corresponding to the target base vector;
calculating a first vector according to the target base vector, the weight coefficient, and the first vector function; and
performing diagonalization processing on the first vector to obtain the target tuning information.

27. A device for signal tuning, comprising: a first memory, a first processor, and a computer program stored in the first memory and executable by the first processor, wherein the computer program, when executed by the first processor, causes the first processor to perform the method as claimed in any one of claims 1 to 13.

28. A communication apparatus, comprising: a second memory, a second processor, and a computer program stored in the second memory and executable by the second processor, wherein the computer program, when executed by the second processor, causes the second processor to perform:

the method as claimed in any one of claims 14 to 21,
or
the method as claimed in any one of claims 24 to 26.

29. A computer-readable storage medium storing a computer-executable instruction which, when executed by a processor, causes the processor to perform:

the method as claimed in any one of claims 1 to 13,
or
the method as claimed in any one of claims 14 to 26.

FIG. 1

First communication
apparatus

Second communication
apparatus

Intelligent surface

S1100: Determine at least one target base vector,
where the target base vector is information obtained
by processing first channel information and second
channel information by a first preset function, and
is indicative of a difference between the first
channel information and the second channel
information

S1200: Process the target base vector by a second
preset function to obtain target tuning
information

FIG. 2

First communication apparatus

Second communication apparatus

Intelligent surface

Indication information

S2100: Acquire indication information

S2200: Determine a measurement and tuning parameter set according to the indication information

S2300: Adjust an electromagnetic characteristic of an electromagnetic unit in the device for signal tuning according to the measurement and tuning information, to allow the electromagnetic unit to reflect pilot information to the second communication device, to measure target tuning information of the device for signal tuning

Pilot information

Pilot information

Feedback information

FIG. 3

FIG. 4

FIG. 5

First communication
apparatus

Second communication
apparatus

Intelligent surface

Pilot information

Pilot information

S3100: Send feedback information to the first
communication apparatus in response to pilot
information sent by a device for signal tuning , to
measure target tuning information of the device for
signal tuning

Feedback information

FIG. 6

First communication
apparatus

Second communication
apparatus

Intelligent surface

S3200: Receive a mode switching instruction from
the first communication apparatus

S3300: Transition a measurement state according to
mode switching instruction, where the measurement
state indicates: generation of feedback information for
the pilot information and transmission of the feedback
information to the first communication apparatus

Pilot information

Pilot information

S3100: Send feedback information to the first
communication apparatus in response to pilot
information sent by a device for signal tuning, to
measure target tuning information of the device for
signal tuning

Feedback information

FIG. 7

First communication
apparatus

Second communication
apparatus

Intelligent surface

S3400: Send indication information to the
device for signal tuning, to allow the
device for signal tuning to determine a
measurement and tuning parameter set

Indication information

S2100: Acquire indication
information

S2200: Determine a
measurement and tuning
parameter set according to
the indication information

Pilot information

Pilot information

S3100: Send feedback information to the first
communication apparatus in response to pilot
information sent by a device for signal tuning, to
measure target tuning information of the device for
signal tuning

Feedback information

FIG. 8

First communication
apparatus

Second communication
apparatus

Intelligent surface

S4100: Send pilot
information

Pilot information

S4200: Acquire feedback
information from the
second communication
apparatus

Pilot information

Feedback information

S4300: Obtain target
tuning information
through calculation
according to the
feedback information, a
measurement and tuning
parameter set, and a set
pattern of the
measurement and tuning
parameter set

FIG. 9

First communication
apparatus

Second communication
apparatus

Intelligent surface

S4400: Send indication
information to the
device for signal tuning

Indication information

S2100: Acquire indication
information

S4100: Send pilot
information

S2200: Determine a measurement
and tuning parameter set according
to the indication information

Pilot information

Pilot information

Feedback information

S4200: Acquire feedback
information from second
communication apparatus

S4300: Obtain target tuning
information through calculation
according to the feedback
information, a measurement and
tuning parameter set, and a set
pattern of the measurement and
tuning parameter set

FIG. 10

EP 4 518 197 A1

First communication apparatus

Second communication apparatus

Intelligent surface

S4400: Send indication information to the device for signal tuning

Indication information

S2100: Acquire indication information

S4100: Send pilot information

S2200: Determine a measurement and tuning parameter set according to the indication information

Pilot information

S2300: Tune an electromagnetic characteristic of an electromagnetic unit in the device for signal tuning according to the measurement and tuning information, to allow the electromagnetic unit to reflect pilot information to the second communication apparatus

Pilot information

S3100: Send feedback information to the first communication apparatus in response to pilot information sent by a device for signal tuning

Feedback information

S4200: Acquire feedback information from the second communication apparatus

S4300: Obtain target tuning information through calculation according to the feedback information, a measurement and tuning parameter set, and a set pattern of the measurement and tuning parameter set

FIG. 11

**INTERNATIONAL SEARCH REPORT**

| International application No. |
|---|
| **PCT/CN2023/088440** |

**A. CLASSIFICATION OF SUBJECT MATTER**

H04B17/309(2015.01)i

According to International Patent Classification (IPC) or to both national classification and IPC

**B. FIELDS SEARCHED**

Minimum documentation searched (classification system followed by classification symbols)

IPC: H04B, H04W

Documentation searched other than minimum documentation to the extent that such documents are included in the fields searched

Electronic data base consulted during the international search (name of data base and, where practicable, search terms used)

CNTXT; CNKI; ENTXTC; DWPI; 3GPP; IEEE: 智能面板, 智能表面, 信号调节, 调控, 差异, 信道, 导频, 目标, 矢量, smart panel, intelligent surface, signal conditioning, adjust, differences, channel, pilot, target, vector

**C. DOCUMENTS CONSIDERED TO BE RELEVANT**

| Category* | Citation of document, with indication, where appropriate, of the relevant passages | Relevant to claim No. |
|---|---|---|
| X | CN 111866726 A (ZTE CORP.) 30 October 2020 (2020-10-30) description, paragraphs [0047]-[0050] and [0201]-[0203], and figure 3 | 1, 13, 14, 15, 17, 18, 23, 27-29 |
| A | CN 111866726 A (ZTE CORP.) 30 October 2020 (2020-10-30) description, paragraphs [0047]-[0050] and [0201]-[0203], and figure 3 | 2-12, 16, 19-22, 24-26 |
| A | CN 112735111 A (ZTE CORP.) 30 April 2021 (2021-04-30) entire document | 1-29 |
| A | CN 111901014 A (ZTE CORP.) 06 November 2020 (2020-11-06) entire document | 1-29 |
| A | US 2020358205 A1 (AGENCY FOR SCIENCE, TECHNOLOGY & RESEARCH) 12 November 2020 (2020-11-12) entire document | 1-29 |
| A | WO 2022057918 A1 (SONY GROUP CORP.) 24 March 2022 (2022-03-24) entire document | 1-29 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 June 2023** | **28 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 111866726 | A | 30 October 2020 | WO | 2022001401 | A1 | 06 January 2022 |
| | | | | KR | 20230030627 | A | 06 March 2023 |
| | | | | AU | 2021301699 | A1 | 19 January 2023 |
| CN | 112735111 | A | 30 April 2021 | WO | 2022127697 | A1 | 23 June 2022 |
| CN | 111901014 | A | 06 November 2020 | WO | 2021139570 | A1 | 15 July 2021 |
| | | | | KR | 20220125294 | A | 14 September 2022 |
| | | | | EP | 4089926 | A1 | 16 November 2022 |
| | | | | US | 2023041198 | A1 | 09 February 2023 |
| | | | | JP | 2023510292 | W | 13 March 2023 |
| US | 2020358205 | A1 | 12 November 2020 | WO | 2019108132 | A1 | 06 June 2019 |
| | | | | SG | 11202004670 | YA | 29 June 2020 |
| | | | | CN | 108137795 | A | 08 June 2018 |
| | | | | EP | 3359585 | A1 | 15 August 2018 |
| | | | | US | 2018280952 | A1 | 04 October 2018 |
| | | | | JP | 2018532849 | A | 08 November 2018 |
| WO | 2022057918 | A1 | 24 March 2022 | CN | 114257475 | A | 29 March 2022 |

**INTERNATIONAL SEARCH REPORT**
Information on patent family members

International application No.

**PCT/CN2023/088440**

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210453625